(19) **Europäisches Patentamt / European Patent Office / Office européen des brevets**

(11) **EP 4 752 982 A1**

(12) **EUROPEAN PATENT APPLICATION**
published in accordance with Art. 153(4) EPC

(43) Date of publication:
03.06.2026 Bulletin 2026/23

(21) Application number: 24845398.7

(22) Date of filing: 09.07.2024

(51) International Patent Classification (IPC):
$H01M\ 4/62^{(2006.01)}$   $C08F\ 279/02^{(2006.01)}$
$H01G\ 11/24^{(2013.01)}$   $H01G\ 11/30^{(2013.01)}$
$H01G\ 11/86^{(2013.01)}$   $H01M\ 4/13^{(2010.01)}$
$H01M\ 4/134^{(2010.01)}$   $H01M\ 4/139^{(2010.01)}$

(52) Cooperative Patent Classification (CPC):
Y02E 60/10

(86) International application number:
PCT/JP2024/024839

(87) International publication number:
WO 2025/023017 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.07.2023 JP 2023122290

(71) Applicant: ENEOS Materials Corporation
Tokyo 105-7109 (JP)

(72) Inventors:
• NAKAYAMA, Takuya
  Tokyo 105-7109 (JP)
• MASUDA, Kana
  Tokyo 105-7109 (JP)
• MORI, Kazumasa
  Tokyo 105-7109 (JP)

(74) Representative: Becker, Eberhard
Becker Kurig & Partner
Patentanwälte mbB
Bavariastraße 7
80336 München (DE)

(54) **BINDER COMPOSITION FOR POWER STORAGE DEVICE, SLURRY FOR POWER STORAGE DEVICE ELECTRODE, POWER STORAGE DEVICE ELECTRODE, AND POWER STORAGE DEVICE**

(57) Provided is a binder composition for a power storage device with which it is possible to fabricate a power storage device electrode that has excellent adhesion and in which electrode expansion associated with repeated charging/discharging is suppressed, and to improve cycle service-life properties of the power storage device. A binder composition for a power storage device according to the present invention contains a polymer (A) and a liquid medium (B), the polymer (A) containing, when the total of repeating units included in the polymer (A) is 100 parts by mass, 50-80 parts by mass of a repeating unit (a1) derived from a conjugated diene compound, 15-49 parts by mass of a repeating unit (a2) derived from an aromatic vinyl compound, and 0.1-10 parts by mass of a repeating unit (a3) derived from unsaturated carboxylic acid. The $\tan \delta$ of the dynamic viscoelasticity of the polymer (A) (loss modulus/storage modulus) has one peak top in the range of -50°C to 10°C inclusive, and one peak top in the range of 150°C to 250°C inclusive. When the $\tan \delta$ of the peak top in the range of -50°C to 10°C inclusive is $\tan \delta$ (Tp1) and the $\tan \delta$ of the peak top in the range 150°C to 250°C inclusive is $\tan \delta$ (Tp2), the relationship of expression (1) is satisfied.
(1): $\tan \delta$ (Tp2)/ $\tan \delta$ (Tp1) < 0.5

FIG. 1

## Description

Technical Field

The present invention relates to a binder composition for an electrical storage device, a slurry for an electrical storage device electrode, an electrical storage device electrode, and an electrical storage device.

Background Art

In recent years, there has been a demand for electrical storage devices having a high voltage and a high energy density to serve as power sources for driving electronic devices. Lithium ion batteries, lithium ion capacitors, etc. have been expected to be used as such electrical storage devices.

An electrode used in such an electrical storage device is produced by coating and drying, onto the surface of a current collector, a composition (slurry for an electrical storage device electrode) containing an active material and a polymer functioning as a binder. Properties required for the polymer used as the binder may include bonding ability between active materials, adhesion ability between the active material and the current collector, and powder drop resistance that prevents fine powder of the active material from detaching from the active material layer when cutting a coated and dried composition coating film (hereinafter also referred to as "active material layer"). By configuring such a binder material to exhibit favorable adhesion and reducing the internal resistance of the battery caused by the binder material, favorable charge-discharge properties can be imparted to the electrical storage device.

It has been empirically clarified that the bonding ability between active materials, the adhesion ability between the active material and the current collector, and the powder drop resistance are substantially in a proportional relationship with respect to performance quality. Thus, in the present specification, these may be collectively expressed using the term "adhesion" hereinafter.

On the other hand, to further increase the capacity of electrical storage devices, the use of materials with a large lithium ion storage capacity is being studied. Active materials utilizing materials with a large lithium ion storage capacity undergo large volume changes due to lithium ion storage and release. Thus, when a conventionally used electrode binder is applied to such materials with a large lithium storage capacity, adhesion cannot be maintained, the active material peels off, and significant capacity reduction occurs along with charge and discharge.

As techniques for improving the adhesion of electrode binders, techniques for controlling the surface acid content of particulate binder particles (see Patent Documents 1 and 2), techniques for improving the above properties by using binders having epoxy groups or hydroxy groups (see Patent Documents 3 and 4), etc. have been proposed. In addition, a technique that attempts to restrain the active material with the rigid molecular structure of polyimide to suppress the volume change of the active material (see Patent Document 5) has been proposed.

Related Art Documents

Patent Documents

Patent Document 1: International Patent Publication No. 2011/096463
Patent Document 2: International Patent Publication No. 2013/191080
Patent Document 3: Japanese Patent Application Laid-Open No. 2010-205722
Patent Document 4: Japanese Patent Application Laid-Open No. 2010-3703
Patent Document 5: Japanese Patent Application Laid-Open No. 2011-204592

SUMMARY OF INVENTION

Problem to Be Solved by Invention

However, the electrode binders as disclosed in Patent Documents 1 to 5 above do not exhibit sufficient adhesion in practical application of new active materials represented by silicon materials, which have a large lithium ion storage capacity and undergo large volume changes accompanying lithium ion storage and release. When using such electrode binders, there is a problem that durability necessary for practical application cannot be sufficiently obtained because the electrode deteriorates due to detachment of the active material and the like upon repeating charge and discharge.

Some embodiments according to the present invention provide a binder composition for an electrical storage device capable of producing an electrical storage device electrode with excellent adhesion and suppressed electrode expansion accompanying repeated charge and discharge, and capable of improving cycle life properties of an electrical storage device.

Means for Solving Problem

The present invention has been made to solve at least part of the above-described problems, and may be realized as any of the following aspects.

An aspect of a binder composition for an electrical storage device according to the present invention contains a polymer (A) and a liquid medium (B). With a total of repeating units contained in the polymer (A) being 100 parts by mass, the polymer (A) contains: 50 to 80 parts by mass of a repeating unit (a1) derived from a conjugated diene compound; 15 to 49 parts by mass of a repeating unit (a2) derived from an aromatic vinyl compound; and 0.1 to 10 parts by mass of a repeating unit (a3) derived from an unsaturated carboxylic acid. $\tan\delta$ (loss modulus/storage modulus) of dynamic viscoelasticity of the polymer (A) has one peak top in a range of -50°C or higher and 10°C or lower and has one peak top in a range of 150°C or higher and 250°C or lower. With $\tan\delta$ of the peak top in the range of -50°C or higher and 10°C or lower being $\tan\delta$(Tp1) and $\tan\delta$ of the peak top in the range of 150°C or higher and 250°C or lower being $\tan\delta$(Tp2), a relationship of Formula (1) below is satisfied: $\tan\delta$(Tp2) / $\tan\delta$(Tp1) < 0.5 (1).

In an aspect of the binder composition for an electrical storage device, a relaxation time of protons upon measuring a latex of the polymer (A) having a solid content concentration of 10% according to a CPMG method of pulse NMR may be 1500 ms or more.

In any one of the aspects of the binder composition for an electrical storage device, a total amount of the repeating unit (a1), the repeating unit (a2), and the repeating unit (a3) may be 80 parts by mass or more.

In any one of the aspects of the binder composition for an electrical storage device, the polymer (A) may further contain 0.1 to 10 parts by mass of a repeating unit (a4) derived from an unsaturated carboxylic acid ester.

In any one of the aspects of the binder composition for an electrical storage device, the polymer (A) may further contain 0.1 to 10 parts by mass of a repeating unit (a5) derived from an $\alpha,\beta$-unsaturated nitrile compound.

In any one of the aspects of the binder composition for an electrical storage device, an electrolytic solution swelling degree of the polymer (A) may be 100 to 350%.

In any one of the aspects of the binder composition for an electrical storage device, the polymer (A) may be a polymer particle. A number average particle diameter of the polymer particle may be 50 nm or more and 500 nm or less.

In any one of the aspects of the binder composition for an electrical storage device, a surface acid content of the polymer particle may be 0.05 mmol/g or more and 1 mmol/g or less.

In any one of the aspects of the binder composition for an electrical storage device, the liquid medium (B) may be water.

An aspect of a slurry for an electrical storage device electrode according to the present invention contains the binder composition for an electrical storage device of any one of the above aspects and an active material.

In an aspect of the slurry for an electrical storage device electrode, the slurry for an electrical storage device electrode may contain a silicon material as the active material.

An aspect of an electrical storage device electrode according to the present invention includes: a current collector; and an active material layer formed by coating and drying the slurry for an electrical storage device electrode of any one of the above aspects onto a surface of the current collector.

An aspect of an electrical storage device according to the present invention includes the electrical storage device electrode of the above aspect.

Effects of Invention

According to the binder composition for an electrical storage device according to the present invention, an electrical storage device electrode with excellent adhesion and suppressed electrode expansion accompanying repeated charge and discharge can be produced, and thus cycle life properties of an electrical storage device can be improved.

BRIEF DESCRIPTION OF THE DRAWING

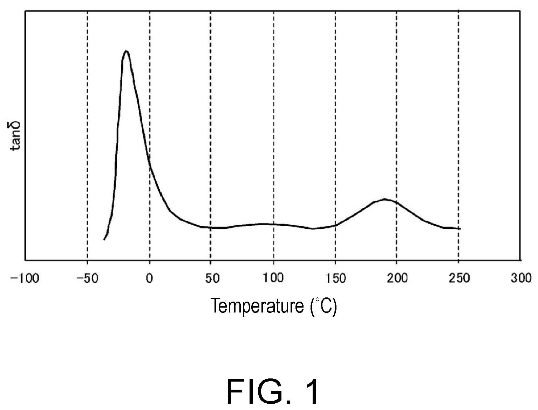

[FIG. 1] FIG. 1 is a diagram showing a relationship between measurement temperature and $\tan\delta$ in dynamic viscoelasticity measurement of a film produced in Example 5.

EMBODIMENTS FOR IMPLEMENTING INVENTION

Hereinafter, preferred embodiments according to the present invention will be described in detail. The present invention is not limited to be the embodiments described below alone, and should be understood to also include various modification examples implemented within a scope that does not change the gist of the present invention.

In the present specification, "(meth)acrylic acid ..." represents "acrylic acid ..." or "methacrylic acid ...", "... (meth) acrylate" represents "... acrylate" or "... methacrylate", and "(meth)acrylamide" represents "acrylamide" or "methacrylamide".

In the present specification, a numerical value range described as "X to Y" is interpreted as including a numerical value X as a lower limit value and including a numerical value Y as an upper limit value.

1. Binder Composition for Electrical Storage Device

A binder composition for an electrical storage device according to an embodiment of the present invention contains a polymer (A) and a liquid medium (B). The polymer (A) contains 50 to 80 parts by mass of a repeating unit (a1) derived from a conjugated diene compound, 15 to 49 parts by mass of a repeating unit (a2) derived from an aromatic vinyl compound, and 0.1 to 10 parts by mass of a repeating unit (a3) derived from an unsaturated carboxylic acid, when a total of repeating units contained in the polymer (A) is 100 parts by mass. In addition, tanδ (loss modulus/storage modulus) of dynamic viscoelasticity of the polymer (A) has one peak top in a range of -50°C or higher and 10°C or lower and has one peak top in a range of 150°C or higher and 250°C or lower, and when tanδ of the peak top in the range of -50°C or higher and 10°C or lower is tanδ(Tp1) and tanδ of the peak top in the range of 150°C or higher and 250°C or lower is tanδ(Tp2), a relationship of Formula (1) below is satisfied.

$$\tan\delta(Tp2) / \tan\delta(Tp1) < 0.5 \quad (1)$$

The binder composition for an electrical storage device according to the present embodiment can be used as a material for producing an electrical storage device electrode (active material layer) with improved bonding ability between active materials, adhesion ability between the active material and a current collector, and powder drop resistance, and can also be used as a material for producing a protective film for suppressing a short circuit caused by dendrites generated along with charge and discharge. Hereinafter, each component contained in the binder composition for an electrical storage device according to the present embodiment will be described in detail.

1.1. Polymer (A)

The binder composition for an electrical storage device according to the present embodiment contains a polymer (A). The polymer (A) may be in a latex form dispersed in a liquid medium (B) to be described later, or may be in a dissolved state in the liquid medium (B), but is preferably in a latex state dispersed in the liquid medium (B). With the polymer (A) being in a latex state dispersed in the liquid medium (B), stability of a slurry for an electrical storage device electrode (hereinafter also referred to as "slurry") produced by mixing with an active material becomes favorable, and coatability of the slurry onto a current collector becomes favorable, which is preferable.

Hereinafter, repeating units constituting the polymer (A), physical properties of the polymer (A), and a production method will be sequentially described.

1.1.1. Repeating Units Constituting Polymer (A)

The polymer (A) contains 50 to 80 parts by mass of a repeating unit (a1) derived from a conjugated diene compound (hereinafter also simply referred to as "repeating unit (a1)"), 15 to 49 parts by mass of a repeating unit (a2) derived from an aromatic vinyl compound (hereinafter also simply referred to as "repeating unit (a2)"), and 0.1 to 10 parts by mass of a repeating unit (a3) derived from an unsaturated carboxylic acid (hereinafter also simply referred to as "repeating unit (a3)"), when the total of repeating units contained in the polymer (A) is 100 parts by mass. In addition to the repeating unit (a1), the repeating unit (a2), and the repeating unit (a3), the polymer (A) may also contain repeating units derived from other monomers copolymerizable therewith.

1.1.1.1. Repeating Unit (a1) Derived from Conjugated Diene Compound A content ratio of the repeating unit (a1) derived from a conjugated diene compound is 50 to 80 parts by mass when the total of repeating units contained in the polymer (A) is 100 parts by mass. The lower limit of the content ratio of the repeating unit (a1) is preferably 52 parts by mass, and more preferably 55 parts by mass. The upper limit of the content ratio of the repeating unit (a1) is preferably 78 parts by mass, and more preferably 75 parts by mass. With the polymer (A) containing the repeating unit (a1) within the above range, dispersibility of the active material and a filler becomes favorable, and production of a homogeneous active material layer and protective film becomes possible, so structural defects in an electrode plate are eliminated and favorable repeated charge-discharge properties are exhibited. In addition, stretchability can be imparted to the polymer (A) coating the surface of the active material, and adhesion can be improved by stretching and contracting of the polymer (A), so favorable charge-discharge durability properties are exhibited.

The conjugated diene compound is not particularly limited, but examples thereof include 1,3-butadiene, 2-methyl-1,3-butadiene, 2,3-dimethyl-1,3-butadiene, 2-chloro-1,3-butadiene, etc., and one or more selected from the above may be used. Among these, 1,3-butadiene is particularly preferable.

### 1.1.1.2. Repeating Unit (a2) Derived from Aromatic Vinyl Compound

A content ratio of the repeating unit (a2) derived from an aromatic vinyl compound is 15 to 49 parts by mass when the total of repeating units contained in the polymer (A) is 100 parts by mass. The lower limit of the content ratio of the repeating unit (a2) is preferably 17 parts by mass, and more preferably 20 parts by mass. The upper limit of the content ratio of the repeating unit (a2) is preferably 47 parts by mass, and more preferably 45 parts by mass. With the polymer (A) containing the repeating unit (a2) within the above range, fusion between the polymer (A) dispersed in the active material layer can be suppressed, favorable slurry properties can be exhibited, and coatability can be improved. In addition, since permeability of an electrolytic solution is improved, favorable repeated charge-discharge properties are exhibited. Furthermore, a favorable binding force may be exhibited with respect to a silicon material, graphite, etc. used as the active material, and an electrical storage device electrode excellent in adhesion is obtained.

The aromatic vinyl compound is not particularly limited, but examples thereof include styrene, $\alpha$-methylstyrene, p-methylstyrene, vinyltoluene, chlorostyrene, divinylbenzene, etc., and one or more selected from the above may be used. Among these, styrene is particularly preferable.

### 1.1.1.3. Repeating Unit (a3) Derived from Unsaturated Carboxylic Acid

The polymer (A) may contain a repeating unit (a3) derived from an unsaturated carboxylic acid. A content ratio of the repeating unit (a3) derived from an unsaturated carboxylic acid is preferably 0.1 to 10 parts by mass when the total of repeating units contained in the polymer (A) is 100 parts by mass. The lower limit of the content ratio of the repeating unit (a3) is preferably 0.5 parts by mass, and more preferably 1 part by mass. The upper limit of the content ratio of the repeating unit (a3) is preferably 9 parts by mass, and more preferably 8 parts by mass. With the polymer (A) containing the repeating unit (a3) within the above range, adhesion between the current collector and the active material layer can be improved, and an adhesion strength of the electrode may be improved.

The unsaturated carboxylic acid is not particularly limited, but examples thereof include monocarboxylic acids and dicarboxylic acids (including anhydrides), such as acrylic acid, methacrylic acid, crotonic acid, maleic acid, fumaric acid, itaconic acid, etc., and one or more selected from the above may be used. Among these, preferably, one or more selected from acrylic acid, methacrylic acid, and itaconic acid are used.

### 1.1.1.4. Other Repeating Units

In addition to the repeating unit (a1), the repeating unit (a2), and the repeating unit (a3), the polymer (A) may also contain repeating units derived from other monomers copolymerizable therewith. Examples of such repeating units include a repeating unit (a4) derived from an unsaturated carboxylic acid ester (hereinafter also simply referred to as "repeating unit (a4)"), a repeating unit (a5) derived from an $\alpha,\beta$-unsaturated nitrile compound (hereinafter also simply referred to as "repeating unit (a5)"), a repeating unit (a6) derived from (meth)acrylamide (hereinafter also simply referred to as "repeating unit (a6)"), a repeating unit (a7) derived from a compound having a sulfonic acid group (hereinafter also simply referred to as "repeating unit (a7)"), a repeating unit derived from a cationic monomer, etc.

\<Repeating Unit (a4) Derived from Unsaturated Carboxylic Acid Ester\>

The polymer (A) may contain a repeating unit (a4) derived from an unsaturated carboxylic acid ester. A content ratio of the repeating unit (a4) is preferably 0.1 to 10 parts by mass when the total of repeating units contained in the polymer (A) is 100 parts by mass. The lower limit of the content ratio of the repeating unit (a4) is preferably 1 part by mass, and more preferably 2 parts by mass. The upper limit of the content ratio of the repeating unit (a4) is preferably 9 parts by mass, and more preferably 8 parts by mass. With the polymer (A) containing the repeating unit (a4) within the above range, affinity between the polymer (A) and the electrolytic solution becomes favorable, and an increase in internal resistance due to the binder becoming an electrical resistance component in the electrical storage device may be suppressed.

Among unsaturated carboxylic acid esters, (meth)acrylic acid ester may be preferably used. Specific examples of (meth)acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, n-amyl (meth)acrylate, isoamyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, hydroxymethyl (meth) acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, glycerin mono(meth)acrylate, glycerin di(meth)acrylate, etc., and one or more selected from the above may be used. Among these, one or more selected from methyl (meth)acrylate, ethyl (meth)acrylate, n-butyl (meth)acrylate, 2-ethylhexyl (meth)acrylate, cyclohexyl (meth) acrylate, ethylene glycol di(meth)acrylate, and 2-hydroxyethyl (meth)acrylate are preferable, and methyl (meth)acrylate is particularly preferable.

<Repeating Unit (a5) Derived from $\alpha,\beta$-Unsaturated Nitrile Compound>

The polymer (A) may contain a repeating unit (a5) derived from an $\alpha,\beta$-unsaturated nitrile compound. A content ratio of the repeating unit (a5) is preferably 0.1 to 10 parts by mass when the total of repeating units contained in the polymer (A) is 100 parts by mass. The lower limit of the content ratio of the repeating unit (a5) is preferably 1 part by mass, and more preferably 2 parts by mass. The upper limit of the content ratio of the repeating unit (a5) is preferably 9 parts by mass, and more preferably 8 parts by mass. With the polymer (A) containing the repeating unit (a5) within the above range, dissolution of the polymer (A) in the electrolytic solution can be reduced, affinity between the polymer (A) and the electrolytic solution becomes favorable, and an increase in internal resistance due to the binder becoming an electrical resistance component in the electrical storage device may be suppressed.

The $\alpha,\beta$-unsaturated nitrile compound is not particularly limited, but examples thereof include acrylonitrile, methacrylonitrile, $\alpha$-chloroacrylonitrile, $\alpha$-ethylacrylonitrile, vinylidene cyanide, etc., and one or more selected from the above may be used. Among these, one or more selected from the group consisting of acrylonitrile and methacrylonitrile are preferable, and acrylonitrile is particularly preferable.

<Repeating Unit (a6) Derived from (Meth)acrylamide>

The polymer (A) may contain a repeating unit (a6) derived from (meth)acrylamide. A content ratio of the repeating unit (a6) is preferably 0 to 8 parts by mass when the total of repeating units contained in the polymer (A) is 100 parts by mass. The lower limit of the content ratio of the repeating unit (a6) is preferably 0.5 parts by mass, and more preferably 1 part by mass. The upper limit of the content ratio of the repeating unit (a6) is preferably 7 parts by mass, and more preferably 6 parts by mass. With the polymer (A) containing the repeating unit (a6) within the above range, dispersibility of the active material or the filler in the slurry may become favorable. In addition, flexibility of the obtained active material layer may become appropriate, and adhesion between the current collector and the active material layer may be improved.

The (meth)acrylamide is not particularly limited, but examples thereof include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetone acrylamide, maleic acid amide, etc., and one or more selected from the above may be used.

<Repeating Unit (a7) Derived from Compound Having Sulfonic Acid Group>

The polymer (A) may contain a repeating unit (a7) derived from a compound having a sulfonic acid group. A content ratio of the repeating unit (a7) is preferably 0 to 8 parts by mass when the total of repeating units contained in the polymer (A) is 100 parts by mass. The lower limit of the content ratio of the repeating unit (a7) is preferably 0.5 parts by mass, and more preferably 1 part by mass. The upper limit of the content ratio of the repeating unit (a7) is preferably 7 parts by mass, and more preferably 6 parts by mass. With the polymer (A) containing the repeating unit (a7) within the above range, dispersibility of the active material or the filler may become favorable, and production of a homogeneous active material layer or protective film may become possible. Furthermore, adhesion with the current collector may also be enhanced, and with structural defects in the electrode plate reduced, favorable charge-discharge properties may be exhibited.

The compound having a sulfonic acid group is not particularly limited, but examples thereof include compounds of vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, acrylamide tert-butylsulfonic acid, 2-hydroxy-3-acrylamidopropanesulfonic acid, 3-allyloxy-2-hydroxypropanesulfonic acid, etc., and alkali salts thereof, and one or more selected from the above may be used.

<Repeating Unit Derived from Cationic Monomer>

The polymer (A) may contain a repeating unit derived from a cationic monomer. The cationic monomer is not particularly limited, but is preferably at least one monomer selected from the group consisting of secondary amines (salts), tertiary amines (salts), and quaternary ammonium salts. Specific examples of the cationic monomer include 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1'-methylpropylideneamino]carboxyamino)ethyl (meth)acrylate, 2-(1-aziridinyl)ethyl (meth)acrylate, methacroylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichlormid, N-allylbenzylamine, N-allylaniline, 2,4-diamino-6-diallylamino-1,3,5-triazine, N-trans-cinnamyl-N-methyl-(1-naphthylmethyl)amine hydrochloride, trans-N-(6,6-dimethyl-2-hepten-4-ynyl)-N-methyl-1-naphthylmethylamine hydrochloride, etc., and one or more selected from the above may be used.

1.1.2. Physical Properties of Polymer (A)

1.1.2.1. Dynamic Viscoelasticity

When dynamic viscoelasticity of the polymer (A) is measured, one peak top of tanδ (loss modulus/storage modulus) is present in the range of -50°C or higher and 10°C or lower, and one peak top of tanδ is present in the range of 150°C or higher and 250°C or lower. When tanδ of the peak top in the range of -50°C or higher and 10°C or lower is tanδ(Tp1) and tanδ of the peak top in the range of 150°C or higher and 250°C or lower is tanδ(Tp2), the relationship of Formula (1) below is satisfied.

$$\tan\delta(Tp2) \, / \, \tan\delta(Tp1) < 0.5 \qquad (1)$$

The measurement sample in this dynamic viscoelasticity measurement is a film of the polymer (A). The film of the polymer (A) is obtained by drying the polymer (A) at 40°C for 24 hours to produce a uniform film with a thickness of $1.0 \pm 0.3$ mm, drying this film in a vacuum dryer at 160°C for 30 minutes, and then cutting the film into a strip shape of 10 mm × 10 mm. Next, using a dynamic viscoelasticity measurement apparatus below, the measurement sample is fixed with a parallel plate (product name "PP-12"), and measurement is performed in a temperature range of -70°C to 250°C under measurement conditions below.

- Measurement conditions: shear mode, measurement frequency 0.01 to 1 Hz, temperature increase rate 0.1°C/min
- Dynamic viscoelasticity measurement apparatus: manufactured by Anton Paar, model "MCR 301"

The value of "tanδ(Tp2) / tanδ(Tp1)" of the polymer (A) used in the present embodiment is smaller than 0.5, is preferably 0.48 or less, and is more preferably 0.45 or less. With the value of "tanδ(Tp2) / tanδ(Tp1)" of the polymer (A) being within the above range, it indicates that there is much polymer component near the peak top temperature of tanδ(Tp1). In addition, it indicates that viscosity is high at a temperature near the peak top temperature of tanδ(Tp1), and it is thought that, with the high viscosity, adhesion with an active material mainly composed of a carbon material can be ensured. Furthermore, it indicates high crosslinking, i.e., the polymer (A) is hard, at a temperature near the peak top temperature of tanδ(Tp2). With the polymer (A) being hard, the binder is not crushed by expansion and contraction during repeated charge and discharge of the Si active material, and the particle shape can be maintained, so it is thought that adhesion to the active material can be maintained and expansion of the electrode can be suppressed. Moreover, since internal resistance can be reduced by enhancing the permeability of the electrolytic solution to the active material, an electrode exhibiting favorable repeated charge-discharge properties can be produced. In addition, since the polymer (A) used in the present embodiment can improve adhesion, an electrode exhibiting favorable charge-discharge durability properties can be produced.

A temperature Tp1 (°C) of the peak top of tanδ in the dynamic viscoelasticity measurement of the polymer (A) is preferably in a temperature range of -38°C or higher and 8°C or lower, and more preferably -35°C or higher and 5°C or lower. In addition, one peak top is preferably present in the above temperature range. The presence of one Tp in the above temperature range indicates that viscosity is high in this same temperature range. With the high viscosity, it is thought that a high binding force of the polymer (A) in this same temperature range can be maintained, and favorable adhesion can be exhibited.

A temperature Tp2 (°C) of the peak top of tanδ in the dynamic viscoelasticity measurement of the polymer (A) is preferably in a temperature range of 155°C or higher and 245°C or lower, and more preferably 160°C or higher and 240°C or lower. In addition, one peak top is preferably present in the above temperature range. The presence of one Tp in the above temperature range indicates that a polymer with a high content of hydrophilic polymer is formed in this same temperature range. With the high content of hydrophilic polymer of the polymer (A) in this same temperature range, it is thought that hardness of the polymer (A) can be exhibited, and internal resistance can be reduced.

Examples of a method for adjusting the temperature Tp of the peak top of $\tan\delta$ include a method of adjusting the monomer composition during polymerization of the polymer (A).

$\tan\delta$(Tp1) of the polymer (A) is preferably 0.5 to 1.2, more preferably 0.55 to 1.15, and particularly preferably 0.6 to 1.10. $\tan\delta$(Tp1) of the polymer (A) being within the above range indicates that the polymer (A) has viscosity but is not too hard, and has a sufficient binding force to maintain the electrode structure.

$\tan\delta$(Tp2) of the polymer (A) is preferably 0.01 to 0.4, more preferably 0.03 to 0.38, and particularly preferably 0.05 to 0.35. $\tan\delta$(Tp2) of the polymer (A) being within the above range indicates that the polymer (A) is not too soft, suppresses fusion between particles, and has sufficient hardness to withstand expansion and contraction of Si.

Examples of a method for adjusting $\tan\delta$(Tp) include changing the glass transition temperature or the gel content of the polymer (A), or changing the monomer addition method during polymerization of the polymer (A).

1.1.2.2. Pulse NMR

When a transverse relaxation time $T_A$ of protons present in an aqueous dispersion of the polymer (A) adjusted to a solid content concentration of 10% is measured according to a pulse NMR method, $T_A < T_0$ is satisfied with respect to a relaxation time $T_0$ of water alone.

Using a pulse nuclear magnetic resonance apparatus "minispec mq20 manufactured by BRUKER", the measurement is performed with the measurement nucleus being hydrogen nucleus, under measurement conditions of a measurement temperature of 25°C, a frequency of 20 MHz, and a 90-180° pulse interval of 0.04 tau, to measure the transverse relaxation time (spin-spin relaxation time) of protons according to the CPMG method (Carr-Purcell Meiboom-Gill method). During the measurement, the pH of the aqueous dispersion is preferably adjusted to 8.0.

The transverse relaxation time $T_A$ of protons present in the aqueous dispersion of the polymer (A) is preferably 1500 ms or more, more preferably 1550 ms or more, and particularly preferably 1600 ms or more. The transverse relaxation time of protons measured according to the pulse NMR method is measured as the relaxation time of all constituent components of the measurement sample. Thus, in the case of an aqueous dispersion of the polymer (A) with a solid content concentration of 10%, the relaxation time $T_A$ is obtained as an average value of the relaxation time of protons present in 10% of the polymer (A) and 90% of water.

The relaxation time $T_A$ becomes shorter as the interaction between the surface of the polymer (A) and water molecules increases. That is, the relaxation time $T_A$ becomes shorter as the particle surface is more hydrophilic, and becomes longer as the particle surface is more hydrophobic. Thus, since the surface of the polymer (A) becomes more hydrophobic and more effectively adsorbs to the active material surface as the relaxation time $T_A$ is longer, it is thought that excellent adhesion and an effect of suppressing expansion of the electrode are exhibited.

1.1.2.3. Number Average Particle Diameter

In the case where the polymer (A) is a particle, the number average particle diameter of the particles is preferably 50 nm or more and 500 nm or less, more preferably 70 nm or more and 480 nm or less, and particularly preferably 90 nm or more and 450 nm or less. With the number average particle diameter of the particles of the polymer (A) being within the above range, since the particles of the polymer (A) easily adsorb to the surface of the active material, the particles of the polymer (A) can also follow and move along with the movement of the active material. As a result, since migration can be suppressed, deterioration of electrical properties may be reduced.

The number average particle diameter of the particles of the polymer (A) is an average value of particle diameters obtained from images of 50 particles observed by a transmission electron microscope (TEM). Examples of the transmission electron microscope include "H-7650" manufactured by Hitachi High-Tech Corporation.

1.1.2.4. Surface Acid Content

In the case where the polymer (A) is a particle, the surface acid content of the particle is preferably 0.05 mmol/g or more and 1 mmol/g or less, more preferably 0.07 mmol/g or more and 0.95 mmol/g or less, and particularly preferably 0.10 mmol/g or more and 0.90 mmol/g or less. With the surface acid content of the particle of the polymer (A) being within the above range, a stable and homogeneous slurry can be produced. With an active material layer produced using such a homogeneous slurry, an active material layer in which the active material and the particles of the polymer (A) are uniformly dispersed and which has small variation in thickness can be obtained. As a result, since variation in charge-discharge properties within the electrode can be suppressed, an electrical storage device exhibiting favorable charge-discharge properties can be obtained. The surface acid content of the polymer (A) may be measured according to a method described in Examples below.

1.1.2.5. Electrolytic Solution Swelling Degree

A swelling degree (hereinafter also referred to as "electrolytic solution swelling degree"), which is obtained when the polymer (A) is immersed in a solvent composed of ethylene carbonate and ethyl methyl carbonate at a volume fraction of 1:1 under conditions of 70°C and 24 hours, is preferably 100% or more and 350% or less, more preferably 110% or more and 250% or less, and particularly preferably 120% or more and 200% or less. With the electrolytic solution swelling degree of the polymer (A) being within the above range, the polymer (A) can appropriately swell by absorbing the electrolytic solution. As a result, since solvated lithium ions can easily reach the active material, electrode resistance can be effectively reduced and more favorable charge-discharge properties can be realized. In addition, with the electrolytic solution swelling degree of the polymer (A) being within the above range, a large volume change does not occur even when the polymer (A) absorbs the electrolytic solution, so adhesion is also excellent.

1.1.3. Method for Producing Polymer (A)

<Polymerization Process>

The polymerization process of the polymer (A) is not particularly limited, but may be performed, for example, according to an emulsion polymerization method performed in the presence of a conventional emulsifier, chain transfer agent, polymerization initiator, etc.

Examples of the emulsifier may include: anionic surfactants such as sulfate ester salts of higher alcohols, alkylbenzene sulfonate, alkylnaphthalene sulfonate, alkyldiphenyl ether disulfonate, aliphatic sulfonate, aliphatic carboxylate, dehydroabietate, naphthalene sulfonic acid-formalin condensate, sulfate ester salts of nonionic surfactants, etc.; nonionic surfactants such as alkyl ester of polyethylene glycol, alkyl phenyl ether of polyethylene glycol, alkyl ether of polyethylene glycol, etc.; fluorine-based surfactants such as perfluorobutyl sulfonate, perfluoroalkyl group-containing phosphate ester, perfluoroalkyl group-containing carboxylate, perfluoroalkyl ethylene oxide adducts, etc., and one or more selected from the above may be used.

Specific examples of the chain transfer agent and the polymerization initiator may include compounds described in Japanese Patent No. 5999399 or the like.

The emulsion polymerization method for synthesizing the polymer (A) may be performed according to single-stage polymerization, or multi-stage polymerization of two or more stages.

In the case of performing the synthesis of the polymer (A) according to single-stage polymerization, the mixture of the above monomers may be subjected to emulsion polymerization in the presence of appropriate emulsifier, chain transfer agent, polymerization initiator, etc., preferably at a temperature of 0 to 80°C, and preferably for a polymerization time of 4 to 36 hours.

In the case of performing the synthesis of the polymer (A) according to two-stage polymerization, the polymerization at each stage is preferably set as follows.

A usage ratio of the monomers used in the first-stage polymerization is preferably set in a range of 20 to 99 mass%, and more preferably in a range of 25 to 99 mass%, with respect to a total mass of the monomers (a total of the mass of the monomers used in the first-stage polymerization and the mass of the monomers used in the second-stage polymerization). By performing the first-stage polymerization at such a usage ratio of the monomers, particles of the polymer (A) that are excellent in dispersion stability and in which aggregates are less likely to occur can be obtained, and an increase in viscosity over time of the binder composition for an electrical storage device after coagulation can also be suppressed, which is preferable.

The types of monomers used in the second-stage polymerization and the usage ratios thereof may be the same as or different from the types of monomers used in the first-stage polymerization and the usage ratios thereof.

The polymerization conditions at each stage are preferably set as follows from the viewpoint of dispersibility of the particles of the polymer (A) to be obtained.

- First-stage polymerization: preferably at a temperature of 0 to 80°C; preferably for a polymerization time of 2 to 36 hours; preferably at a polymerization conversion rate of 50 mass% or more, and more preferably 60 mass% or more.
- Second-stage polymerization: preferably at a temperature of 0 to 80°C; preferably for a polymerization time of 2 to 18 hours.

In the case of performing the synthesis of the polymer (A) according to three-stage polymerization, the polymerization at each stage is preferably set as follows.

The usage ratio of the monomers used in the first-stage polymerization is preferably set in a range of 20 to 90 mass%, and more preferably in a range of 25 to 80 mass%, with respect to the total mass of the monomers (total of the mass of the monomers used in the first-stage polymerization, the mass of the monomers used in the second-stage polymerization, and the mass of the monomers used in the third-stage polymerization). By performing the first-stage polymerization at such a usage ratio of the monomers, particles of the polymer (A) that are excellent in dispersion stability and in which aggregates are less likely to occur can be obtained, and an increase in viscosity over time of the binder composition for an electrical storage device after coagulation can also be suppressed, which is preferable.

The types of monomers used in the second-stage polymerization and the usage ratios thereof may be the same as or different from the types of monomers used in the first-stage polymerization and the usage ratios thereof.

The types of monomers used in the third-stage polymerization and the usage ratios thereof may be the same as or different from the types of monomers used in the first-stage polymerization and the usage ratios thereof, and the types of monomers used in the second-stage polymerization and the usage ratios thereof.

The polymerization conditions at each stage are preferably set as follows from the viewpoint of dispersibility of the particles of the polymer (A) to be obtained.

- First-stage polymerization: preferably at a temperature of 0 to 80°C; preferably for a polymerization time of 2 to 36 hours; preferably at a polymerization conversion rate of 50 mass% or more, more preferably 60 mass% or more.
- Second-stage polymerization: preferably at a temperature of 0 to 80°C; preferably for a polymerization time of 2 to 18 hours.
- Third-stage polymerization: preferably at a temperature of 0 to 80°C; preferably for a polymerization time of 2 to 9 hours.

By setting the total solid content concentration in the emulsion polymerization to 50 mass% or less, the polymerization reaction can proceed in a state where the dispersion stability of the particles of the polymer (A) to be obtained is favorable. This total solid content concentration is preferably 45 mass% or less, and more preferably 40 mass% or less.

Whether the synthesis of the polymer (A) is performed according to single-stage polymerization or multi-stage polymerization, a neutralizing agent is added to the polymerization mixture preferably after completion of the emulsion polymerization to perform neutralization. The neutralizing agent used herein is not particularly limited, but examples thereof include metal hydroxides such as sodium hydroxide, potassium hydroxide, etc.; ammonia, etc.

1.2. Liquid Medium (B)

The binder composition for an electrical storage device according to the present embodiment contains a liquid medium (B). The liquid medium (B) is preferably an aqueous medium containing water, and is more preferably water. The aqueous medium may contain a non-aqueous medium other than water. Examples of the non-aqueous medium may include amide compound, hydrocarbon, alcohol, ketone, ester, amine compound, lactone, sulfoxide, sulfone compound, etc., and one or more selected from the above may be used. By using an aqueous medium as the liquid medium (B), the binder composition for an electrical storage device according to the present embodiment exhibits reduced degree of adverse effects on the environment and increased safety for handling workers.

A content ratio of the non-aqueous medium contained in the aqueous medium is preferably 10 parts by mass or less, is more preferably 5 parts by mass or less, and is particularly preferably substantially not contained, per 100 parts by mass of the aqueous medium. Herein, "substantially not contained" refers to an extent that a non-aqueous medium is not intentionally added as the liquid medium, and may include a non-aqueous medium that is unavoidably mixed in when preparing the binder composition for an electrical storage device.

1.3. Other Additives

The binder composition for an electrical storage device according to the present embodiment may contain additives other than the components described above as necessary. Examples of such additives include a polymer other than the polymer (A), a preservative, a thickener, etc.

<Polymer Other Than Polymer (A)>

The binder composition for an electrical storage device according to the present embodiment may contain a polymer other than the polymer (A). Such a polymer is not particularly limited, but examples thereof include acrylic polymers containing unsaturated carboxylic acid esters or derivatives thereof as structural units, fluorine-based polymers such as PVDF (polyvinylidene fluoride), etc. These polymers may be used as one type alone or as two or more types in combination. By containing these polymers, flexibility and adhesion may be further improved.

<Preservative>

The binder composition for an electrical storage device according to the present embodiment may contain a preservative. By containing a preservative, proliferation of bacteria, mold, etc. and generation of foreign matter may be suppressed when the binder composition for an electrical storage device is stored. Specific examples of the preservative include compounds described in Japanese Patent No. 5477610 or the like.

<Thickener>

The binder composition for an electrical storage device according to the present embodiment may contain a thickener. By containing a thickener, coatability of the slurry, charge-discharge properties of the obtained electrical storage device, etc. may be further improved.
Examples of the thickener include: cellulose-based polymers such as carboxymethyl cellulose, methyl cellulose, ethyl cellulose, hydroxypropyl cellulose, etc.; poly(meth)acrylic acid; ammonium salts or alkali metal salts of the cellulose compounds or the poly(meth)acrylic acid above; modified polyvinyl alcohol, polyethylene oxide; polyvinyl pyrrolidone, polycarboxylic acid, oxidized starch, phosphate starch, casein, various modified starches, chitin, chitosan derivatives, etc. Among these, cellulose-based polymers are preferable.
Examples of commercially available products of these thickeners may include alkali metal salts of carboxymethyl cellulose such as CMC1120, CMC1150, CMC2200, CMC2280, CMC2450 (all manufactured by Daicel Corporation), etc.
In the case where the binder composition for an electrical storage device according to the present embodiment contains a thickener, a content ratio of the thickener is preferably 5 mass% or less, and more preferably 0.1 to 3 mass%, with respect to 100 mass% of the total solid content of the binder composition for an electrical storage device.

1.4. pH of Binder Composition for Electrical Storage Device

The pH of the binder composition for an electrical storage device according to the present embodiment is preferably 6.0 to 9.5, more preferably 6.3 to 9.2, and particularly preferably 6.5 to 9.0. With the pH being within the above range, occurrence of insufficient leveling properties and liquid dripping can be suppressed, and it becomes easy to produce an electrical storage device electrode that achieves both favorable electrical properties and adhesion.
The "pH" in the present specification refers to a physical property measured as follows. It is a value measured at 25°C in accordance with JIS Z8802:2011 using a pH meter having a glass electrode calibrated with a neutral phosphate standard solution and a borate standard solution as pH standard solutions. Examples of such a pH meter include "HM-7J" manufactured by DKK-TOA Corporation, "D-51" manufactured by HORIBA, Ltd., etc.
One cannot deny that the pH of the binder composition for an electrical storage device is influenced by the monomer composition constituting the polymer (A), but the pH is not determined solely by the monomer composition. That is, it is generally known that, even with the same monomer composition, the pH of the binder composition for an electrical storage device changes depending on polymerization conditions and the like, and Examples in the present specification merely show examples thereof.

2. Slurry for Electrical Storage Device

A slurry for an electrical storage device according to an embodiment of the present invention contains the binder composition for an electrical storage device described above. The binder composition for an electrical storage device described above may be used as a material for producing a protective film for suppressing a short circuit caused by dendrites generated along with charge and discharge, and may also be used as a material for producing an electrical storage device electrode (active material layer) with improved bonding ability between active materials, adhesion ability between the active material and the current collector, and powder drop resistance. Hereinafter, a slurry for an electrical storage device for producing a protective film (hereinafter also referred to as "slurry for a protective film") and a slurry for an electrical storage device for producing an active material layer of an electrical storage device electrode (hereinafter also referred to as "slurry for an electrical storage device electrode") will be described separately.

2.1. Slurry for Protective Film

The "slurry for a protective film" refers to a dispersion used to be coated onto the surface of either or both of an electrode and a separator, and then dried to produce a protective film on the surface of either or both of the electrode and the separator. The slurry for a protective film according to the present embodiment may be composed only of the binder composition for an electrical storage device described above, or may further contain an inorganic filler. Examples of the inorganic filler include inorganic fillers described in Japanese Patent Application Laid-Open No. 2020-184461.

## 2.2. Slurry for Electrical Storage Device Electrode

The "slurry for an electrical storage device electrode" refers to a dispersion used to be coated onto the surface of a current collector, and then dried to produce an active material layer on the surface of the current collector. The slurry for an electrical storage device electrode according to the present embodiment contains the binder composition for an electrical storage device described above and an active material.

Generally, to improve adhesion, a slurry for an electrical storage device electrode often contains a binder component such as an SBR-based copolymer and a thickener such as carboxymethyl cellulose. In contrast, the slurry for an electrical storage device electrode according to the present embodiment can improve adhesion even in the case of containing the polymer (A) described above alone as the polymer component. Of course, to further improve adhesion, the slurry for an electrical storage device electrode according to the present embodiment may also contain a polymer other than the polymer (A) or a thickener. Hereinafter, the components contained in the slurry for an electrical storage device electrode according to the present embodiment will be described.

### 2.2.1. Polymer (A)

The composition, physical properties, production method, etc. of the polymer (A) are as described above, so descriptions thereof will be omitted.

The content ratio of the polymer component in the slurry for an electrical storage device electrode according to the present embodiment is preferably 1 to 8 parts by mass, more preferably 1 to 7 parts by mass, and particularly preferably 1.5 to 6 parts by mass, with respect to 100 parts by mass of the active material. With the content ratio of the polymer component being within the above range, dispersibility of the active material in the slurry becomes favorable, and coatability of the slurry also becomes excellent. Herein, the polymer component contains the polymer (A), a polymer other than the polymer (A) added as necessary, a thickener, etc.

### 2.2.2. Active Material

Examples of the active material used in the slurry for an electrical storage device electrode according to the present embodiment include a positive electrode active material and a negative electrode active material. Specific examples thereof include a carbon material, a silicon material, an oxide containing a lithium atom, a sulfur compound, a lead compound, a tin compound, an arsenic compound, an antimony compound, an aluminum compound, a conductive polymer such as polyacene, a composite metal oxide represented by $A_X B_Y O_Z$ (where A is an alkali metal or a transition metal, B is at least one selected from transition metals such as cobalt, nickel, aluminum, tin, and manganese, O represents an oxygen atom, and X, Y, and Z are respectively numbers in ranges of $1.10 > X > 0.05$, $4.00 > Y > 0.85$, and $5.00 > Z > 1.5$), other metal oxides, etc. Specific examples thereof include compounds described in Japanese Patent No. 5999399 or the like.

The slurry for an electrical storage device electrode according to the present embodiment may be used in producing either a positive electrode or a negative electrode, but is particularly preferably used for a negative electrode.

In the case of producing a negative electrode, among the active materials illustrated above, the active material preferably contains a silicon material and/or a carbon material, and is more preferably a mixture of a silicon material and a carbon material. Since the silicon material has a larger lithium storage amount per unit weight compared to other active materials, the electrical storage capacity of the obtained electrical storage device can be increased. As a result, the output and energy density of the electrical storage device can be increased. On the other hand, since the carbon material has a smaller volume change accompanying charge and discharge than the silicon material, by using a mixture of a silicon material and a carbon material as the negative electrode active material, the influence of the silicon material on volume change can be mitigated, and the adhesion ability between the active material layer and the current collector can be further improved.

In the case of using silicon (Si) as the active material, while silicon has a high capacity, it undergoes a large volume change when storing lithium ions. For this reason, the silicon material exhibits a property of pulverizing due to repeated expansion and contraction and leading to peeling off from the current collector and separation between active materials, which tends to disrupt the conductive network inside the active material layer. Due to this property, the charge-discharge durability properties of the electrical storage device are extremely deteriorated in a short time.

In this regard, the electrical storage device electrode produced using the slurry for an electrical storage device electrode according to the present embodiment can exhibit favorable electrical properties without causing the problems described above even in the case of using a silicon material. The reason thereof is thought to be that the polymer (A) can firmly bind the silicon material, and at the same time, even if the silicon material undergoes volume expansion due to storage of lithium, the polymer (A) can stretch and shrink to maintain the state in which the silicon material is firmly bound.

A content ratio of the silicon material in 100 mass% of the active material is preferably set to 1 mass% or more, more preferably 2 to 50 mass%, even more preferably 3 to 45 mass%, and particularly preferably 10 to 40 mass%. With the content ratio of the silicon material in 100 mass% of the active material being within the above range, an electrical storage device excellent in the balance between improvement of the output and energy density of the electrical storage device and charge-discharge durability properties can be obtained.

The shape of the negative electrode active material is preferably a particle shape. An average particle diameter of the negative electrode active material is preferably 0.1 to 100 $\mu$m, and more preferably 1 to 20 $\mu$m.

On the other hand, in the case of producing a positive electrode, among the active materials illustrated above, the active material is preferably an oxide containing a lithium atom. Examples of the oxide containing a lithium atom include one or more represented by General Formula (2) below and selected from lithium manganate, lithium nickelate, lithium cobaltate, and lithium manganese nickel cobaltate.

$$Li_{1-x}M_x(AO_4) \qquad (2)$$

(In Formula (2), M is at least one metal ion selected from the group consisting of Mg, Ti, V, Nb, Ta, Cr, Mn, Fe, Co, Ni, Cu, Zn, Al, Ga, Ge, and Sn, A is at least one selected from the group consisting of Si, S, P, and V, and x is a number satisfying a relationship $0 < x < 1$.)

The value of x in General Formula (2) above is selected according to the valences of M and A such that the valence of entire General Formula (2) above becomes zero.

Examples of an olivine-type lithium-containing phosphate compound include $LiFePO_4$, $LiCoPO_4$, $LiMnPO_4$, $Li_{0.90}Ti_{0.05}Nb_{0.05}Fe_{0.30}Co_{0.30}Mn_{0.30}PO_4$, etc. Among these, $LiFePO_4$ (lithium iron phosphate) is particularly preferable because iron compounds as raw materials are easily available and inexpensive.

An average particle diameter of the olivine-type lithium-containing phosphate compound is preferably in a range of 1 to 30 $\mu$m, more preferably in a range of 1 to 25 $\mu$m, and particularly preferably in a range of 1 to 20 $\mu$m.

In addition, the active material layer may contain active materials illustrated below. Examples include: a conductive polymer such as polyacene; a composite metal oxide represented by $A_XB_YO_Z$ (where A is an alkali metal or a transition metal, B is at least one selected from transition metals such as cobalt, nickel, aluminum, tin, and manganese, O represents an oxygen atom, and X, Y, and Z are respectively numbers in ranges of $1.10 > X > 0.05$, $4.00 > Y > 0.85$, and $5.00 > Z > 1.5$), other metal oxides, etc.

Examples of the composite metal oxide include lithium cobaltate, lithium nickelate, lithium manganate, ternary lithium nickel cobalt manganate, etc.

The electrical storage device electrode produced using the slurry for an electrical storage device electrode according to the present embodiment can exhibit favorable electrical properties even in the case of using an oxide containing a lithium atom as a positive electrode active material. The reason thereof is thought to be that the polymer (A) can firmly bind the oxide containing a lithium atom and, at the same time, can maintain the state in which the oxide containing a lithium atom is firmly bound even during charge and discharge.

2.2.3. Other Components

In addition to the components described above, components such as a polymer other than the polymer (A), a thickener, a liquid medium, a conductive aid, a pH adjuster, a corrosion inhibitor, an antioxidant, a cellulose fiber, etc. may also be added to the slurry for an electrical storage device electrode according to the present embodiment as necessary. The polymer other than the polymer (A) and the thickener may be appropriately selected from the compounds illustrated in the section "1.3. Other Additives" above and used for similar purposes and at similar content ratios.

<Liquid Medium>

In addition to the amount carried over from the binder composition for an electrical storage device, a liquid medium may be further added to the slurry for an electrical storage device electrode according to the present embodiment. The liquid medium to be added may be the same as or different from the liquid medium (B) contained in the binder composition for an electrical storage device, but is preferably selected and used from among the liquid media illustrated in the section "1.2. Liquid Medium (B)" above.

A content ratio of the liquid medium (including the amount carried over from the binder composition for an electrical storage device) in the slurry for an electrical storage device electrode according to the present embodiment is preferably set such that the solid content concentration in the slurry (referring to a ratio of a total mass of the components other than the liquid medium in the slurry to the total mass of the slurry; the same applies hereinafter) is 30 to 70 mass%, and more preferably 40 to 60 mass%.

<Conductive Aid>

A conductive aid may be further added to the slurry for an electrical storage device electrode according to the present embodiment to impart conductivity and buffer a volume change of the active material due to entry and exit of lithium ions.

Specific examples of the conductive aid include carbon such as activated carbon, acetylene black, Ketjen black, furnace black, graphite, carbon fiber, fullerene, carbon nanotube, etc. Among these, acetylene black, Ketjen black, or carbon nanotube may be preferably used. A content ratio of the conductive aid is preferably 20 parts by mass or less, more preferably 1 to 15 parts by mass, and particularly preferably 2 to 10 parts by mass, with respect to 100 parts by mass of the active material.

<pH Adjuster>

A pH adjuster may be further added to the slurry for an electrical storage device electrode according to the present embodiment to suppress corrosion of the current collector according to the type of the active material.

Examples of the pH adjuster include hydrochloric acid, phosphoric acid, sulfuric acid, acetic acid, formic acid, ammonium phosphate, ammonium sulfate, ammonium acetate, ammonium formate, ammonium chloride, sodium hydroxide, potassium hydroxide, etc. Among these, sulfuric acid, ammonium sulfate, sodium hydroxide, and potassium hydroxide are preferable. In addition, the pH adjuster may also be selected and used from among the neutralizing agents described in the method for producing the polymer (A).

<Corrosion Inhibitor>

A corrosion inhibitor may be further added to the slurry for an electrical storage device electrode according to the present embodiment to suppress corrosion of the current collector according to the type of the active material.

Examples of the corrosion inhibitor may include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, potassium molybdate, etc. Among these, ammonium paratungstate, ammonium metavanadate, sodium metavanadate, potassium metavanadate, and ammonium molybdate are preferable.

<Cellulose Fiber>

A cellulose fiber may be further added to the slurry for an electrical storage device electrode according to the present embodiment. Conventional cellulose fibers may be used. By adding a cellulose fiber, adhesion of the active material to the current collector may be improved. It is thought that the cellulose fiber in a fibrous form binds adjacent active materials in a fibrous form by line bonding or line contact, so detachment of the active material can be prevented and adhesion to the current collector can be improved.

2.2.4. Method for Preparing Slurry for Electrical Storage Device Electrode

The slurry for an electrical storage device electrode according to the present embodiment may be produced according to any method as long as it contains the binder composition for an electrical storage device described above and an active material. From the viewpoint of producing a slurry having more favorable dispersibility and stability more efficiently and inexpensively, it is preferably produced by adding the active material and optional additive components used as necessary to the binder composition for an electrical storage device and mixing them. Examples of specific production methods include a method described in Japanese Patent No. 5999399 or the like.

3. Electrical Storage Device Electrode

An electrical storage device electrode according to an embodiment of the present invention includes a current collector and an active material layer formed by coating and drying the above slurry for an electrical storage device electrode onto a surface of the current collector. Such an electrical storage device electrode may be produced by coating the above slurry for an electrical storage device electrode onto the surface of a current collector such as a metal foil to form a coating film, and then drying the coating film to form an active material layer. The electrical storage device electrode produced in this manner is formed by binding, to the surface of the current collector, an active material layer containing the above polymer (A), the active material, and optional components added as necessary. Thus, the electrical storage device electrode is excellent in adhesion, and expansion of the electrode accompanying repeated charge and discharge is suppressed, so charge-discharge durability properties are excellent.

The current collector is not particularly limited as long as it is composed of a conductive material, and examples thereof include current collectors described in Japanese Patent No. 5999399 or the like.

In the electrical storage device electrode according to the present embodiment, in the case of using a silicon material as the active material, a content ratio of silicon element in 100 mass% of the active material layer is preferably 1 to 30 mass%, more preferably 2 to 20 mass%, and particularly preferably 3 to 10 mass%. With the content ratio of silicon element in the active material layer being within the above range, in addition to improving the electrical storage capacity of an electrical storage device produced therefrom, an active material layer having a uniform distribution of silicon element is obtained. The content of silicon element in the active material layer may be measured, for example, according to a method described in Japanese Patent No. 5999399 or the like.

## 4. Electrical Storage Device

An electrical storage device according to an embodiment of the present invention includes the electrical storage device electrode described above, further contains an electrolytic solution, and may be produced according to a conventional method using components such as a separator. Examples of specific production methods include a method in which a negative electrode and a positive electrode are stacked with a separator interposed therebetween, the stack is wound or folded according to the battery shape and accommodated in a battery container, an electrolytic solution is injected into the battery container, and the battery container is sealed. The shape of the battery may be an appropriate shape such as a coin type, a cylindrical type, a rectangular type, a laminate type, etc.

The electrolytic solution may be liquid or gel, and depending on the type of the active material, an electrolytic solution that effectively exhibits the function as a battery is selected from conventional electrolytic solutions used in electrical storage devices. The electrolytic solution may be a solution in which an electrolyte is dissolved in an appropriate solvent. Examples of such electrolyte and solvent include compounds described in Japanese Patent No. 5999399 or the like.

The above electrical storage device is applicable to lithium ion secondary batteries, electric double layer capacitors, lithium ion capacitors, etc. that require discharge at a high current density. Among these, lithium ion secondary batteries are particularly preferable. In the electrical storage device electrode and the electrical storage device according to the present embodiment, members other than the binder composition for an electrical storage device may be members for conventional lithium ion secondary batteries, electric double layer capacitors, or lithium ion capacitors.

## 5. Examples

Hereinafter, the present invention will be specifically described based on Examples, but the present invention is not limited to these Examples. "Parts" and "%" in Examples and Comparative Examples are on a mass basis unless otherwise specified.

### 5.1. Example 1

### 5.1.1. Preparation of Binder Composition for Electrical Storage Device

<Example 1>

A binder composition for an electrical storage device containing a polymer (A1) was obtained according to two-stage polymerization as shown below. A reactor was loaded with 300 parts by mass of water, a monomer mixture composed of 50 parts by mass of 1,3-butadiene, 35 parts by mass of styrene, 5 parts by mass of acrylonitrile, 1 part by mass of sodium styrenesulfonate, 1 part by mass of itaconic acid, and 1 part by mass of acrylamide, 0.1 parts by mass of tert-dodecyl mercaptan as a chain transfer agent, 0.1 parts by mass of sodium alkyldiphenyl ether disulfonate as an emulsifier, and 1.0 part by mass of potassium persulfate as a polymerization initiator, and after polymerization was performed at 70°C for 18 hours while stirring, it was confirmed that the polymerization conversion rate was 95%. Next, 50 parts by mass of water, 1 part by mass of itaconic acid, 1 part by mass of acrylic acid, 1 part by mass of methacrylic acid, 1 part by mass of hydroxyethyl methacrylate, 1 part by mass of hydroxyethyl acrylate, 1 part by mass of acrylonitrile, and 1 part by mass of sodium styrenesulfonate were further added to the reactor, and after polymerization was performed at 75°C for 12 hours, it was confirmed that the polymerization conversion rate was 98%. Unreacted monomers were removed from the particle dispersion of the polymer (A1) thus obtained, the dispersion was concentrated, a 5% sodium hydroxide aqueous solution was added, and then water was removed using an evaporator to obtain a binder composition for an electrical storage device containing particles of the polymer (A1) with a solid content concentration of 40 mass% and a pH of 7.0.

5.1.2. Evaluation of Physical Properties of Binder Composition for Electrical Storage Device

<Method for Measuring Polymerization Conversion Rate>

The polymerization conversion rate in the synthesis of the polymer described above was measured as follows.
The reaction solution polymerized for a particular time was extracted and placed in an aluminum dish (X(g)) of which the weight had been measured in advance, and the weight (Y(g)) of the reaction solution was measured. This was dried at 155°C for 15 minutes using a hot air dryer. The aluminum dish was taken out, and after cooling, the weight (Z(g)) of the aluminum dish was measured. The polymerization conversion rate (%) was calculated according to Formula (3) below based on the values of the weights X, Y, and Z measured in this manner.

$$\text{Polymerization conversion rate (\%)} = ((Z\text{-}X)/Y) \times 100 \quad (3)$$

<Measurement of Number Average Particle Diameter>

One drop of a latex obtained by diluting the binder composition for an electrical storage device obtained above to 0.1 wt% was dripped onto a collodion support film with a pipette, and further, one drop of a 0.02 wt% osmium tetroxide solution was dripped onto the collodion support film with a pipette, and air drying was performed for 12 hours to prepare a sample. The sample prepared in this manner was observed at a magnification of 10K (magnification) using a transmission electron microscope (TEM, manufactured by Hitachi High-Tech Corporation, model number "H-7650"), image analysis was performed using a HITACHI EMIP program, and a number average particle diameter of 50 randomly selected particles of the polymer (A1) was calculated. As a result, the number average particle diameter of the polymer (A1) was 190 nm. The measurement results are shown in Table 1 below.

<Measurement of pH>

Regarding the binder composition for an electrical storage device obtained above, the pH at 25°C was measured using a pH meter (manufactured by HORIBA, Ltd.), and it was confirmed that the pH was 7.0. The results are shown in Table 1 below.

<Measurement of Electrolytic Solution Swelling Degree>

The polymer (A1) obtained above was dried in a constant temperature bath at 85°C for 24 hours to produce a film. 1 g of this film was immersed in 20 mL of a mixed liquid (EC/EMC = 1/1 (volume ratio), hereinafter, this mixed liquid is referred to as "EC/EMC") composed of ethylene carbonate (EC) and ethyl methyl carbonate (EMC) used as an electrolytic solution in the production of an electrical storage device to be described later, and shaken at 70°C for 24 hours. Next, after filtering with a 300-mesh wire mesh to separate the insoluble content, a weight (Y(g)) of the residue obtained by evaporating and removing the EC/EMC of the dissolved content was measured. In addition, after absorbing, with paper, the EC/EMC adhering to the surface of the insoluble content (film) separated by the above filtering to remove it, a weight (Z(g)) of the insoluble content (film) was measured. Upon measuring the electrolytic solution swelling degree according to Formula (4) below, the electrolytic solution swelling degree of the polymer (A1) was 171 mass%.

$$\text{Electrolytic solution swelling degree (mass\%)} = (Z/(1\text{-}Y)) \times 100 \quad (4)$$

<Measurement of Surface Acid Content>

The surface acid content of the particles of the polymer (A1) contained in the binder composition for an electrical storage device obtained above was measured as follows. First, it was confirmed that 0.005 mol/L sulfuric acid was filled in the reagent bottle at the upper part of the titration burette/main body of a potentiometric titration apparatus (manufactured by Kyoto Electronics Manufacturing Co., Ltd., model "AT-510"), and it was confirmed that the conductivity of ultrapure water was 2 μS or less. Next, purging was performed to remove air from inside the burette, and further, air bubbles were removed from the nozzle. Thereafter, approximately 1 g of the binder composition for an electrical storage device obtained above in terms of solid content was collected in a 300 mL beaker, and the sample weight was recorded. After adding ultrapure water thereto to dilute to 200 mL, a 1 mol/L sodium hydroxide aqueous solution was added dropwise. When the end point was reached, stirring was performed for about 30 seconds, and it was confirmed that the conductivity had stabilized. The RESET button of the measurement program was pressed to set to the measurement standby state. The START button of the measurement program was pressed to start measurement with 0.005 mol/L sulfuric acid. When the end point was reached, the measurement was automatically ended and the file was saved, so the obtained curve was analyzed, and the surface acid content was determined according to Formula (5) below based on the content of sulfuric acid used. As a result, the surface acid content of the polymer (A1) was 0.37 mmol/g. The results are shown in Table 1 below.

Surface acid content (mmol/g) = Content of acid used in carboxylic acid region on particle surface [mL] $\times$ Acid concentration [mol/L] $\times$ Degree of ionization / Sample weight [g] / 1000    (5)

<Pulse NMR>

The transverse relaxation time $T_A$ of protons present in an aqueous dispersion of the polymer (A1) adjusted to a solid content concentration of 10% was measured according to a pulse NMR method. Using a pulse nuclear magnetic resonance apparatus "minispec mq20 manufactured by BRUKER", the measurement was performed with the measurement nucleus being hydrogen nucleus, under measurement conditions of a measurement temperature of 25°C, a frequency of 20 MHz, and a 90-180° pulse interval of 0.04 tau, to measure the transverse relaxation time (spin-spin relaxation time) of water protons according to the CPMG method (Carr-Purcell Meiboom-Gill method). During the measurement, the pH of the aqueous dispersion was adjusted to 8.0. As a result, the transverse relaxation time $T_A$ of protons present in the aqueous dispersion of the polymer (A1) was 2120 ms. The measurement results are shown in Table 1 below.

<Measurement of Dynamic Viscoelasticity>

The polymer (A1) obtained above was dried at 40°C for 24 hours to produce a uniform film having a thickness of 1.0 $\pm$ 0.3 mm. This film was dried in a vacuum dryer at 160°C for 30 minutes. This film was removed from the vacuum dryer and cut into strips of 10 mm $\times$ 10 mm as measurement samples. Next, using a dynamic viscoelasticity measurement apparatus (manufactured by Anton Paar, model "MCR 301"), the measurement sample was fixed with a parallel plate (product name "PP-12"), and dynamic viscoelasticity was measured in a temperature range of -70°C to 250°C under measurement conditions of the shear mode, a measurement frequency of 0.01 to 1 Hz, and a temperature increase rate of 0.1°C/min. As a result, a peak top (tan$\delta$-1) of tan$\delta$ on the low temperature side was observed at 8°C, and the value thereof was 0.96. In addition, a peak top (tan$\delta$-2) of tan$\delta$ on the high temperature side was observed at 192°C, and the value thereof was 0.05. In Table 1 to Table 3 below, the peak top of tan$\delta$ on the low temperature side is represented as "tan$\delta$-1", and tan$\delta$ on the high temperature side is represented as "tan$\delta$-2". In addition, FIG. 1 shows, as an example, a graph representing the relationship between the measurement temperature and tan$\delta$ in the dynamic viscoelasticity measurement of the film produced in Example 5.

5.1.3. Preparation of Slurry for Electrical Storage Device Electrode

<Synthesis of Silicon Material (Active Material)>

A mixture of pulverized silicon dioxide powder (average particle diameter 10 $\mu$m) and carbon powder (average particle diameter 35 $\mu$m) was subjected to heat treatment for 10 hours in an electric furnace with the temperature adjusted to a range of 1100°C to 1600°C under a nitrogen stream (0.5 NL/min) to obtain a silicon oxide powder (average particle diameter 8 $\mu$m) represented by a compositional formula $SiO_x$ (x = 0.5 to 1.1). 300 g of this silicon oxide powder was loaded into a batch-type heating furnace, and the temperature was increased from room temperature (25°C) to 1100°C at a temperature increase rate of 300°C/h while maintaining a reduced pressure of 100 Pa absolute pressure with a vacuum pump. Next, with the pressure in the heating furnace maintained at 2000 Pa, heat treatment (graphite coating treatment) was performed at 1100°C for 5 hours while introducing methane gas at a flow rate of 0.5 NL/min. After completion of the graphite coating treatment, cooling was performed until room temperature at a temperature decrease rate of 50°C/h to obtain approximately 330 g of a graphite-coated silicon oxide powder. This graphite-coated silicon oxide was a conductive powder (active material) in which the surface of silicon oxide was coated with graphite, the average particle diameter thereof was 10.5 $\mu$m, and the ratio of the graphite coating was 2 mass% in the case where the entirety of the obtained graphite-coated silicon oxide was 100 mass%.

<Preparation of Slurry for Electrical Storage Device Electrode>

A twin-screw planetary mixer (manufactured by PRIMIX Corporation, product name "TK Hivis Mix 2P-03") was loaded with 1 part by mass (solid content equivalent value, added as an aqueous solution with a concentration of 2 mass%) of a thickener (product name "CMC2200", manufactured by Daicel Corporation), 4 parts by mass (solid content equivalent value, added as the binder composition for an electrical storage device obtained above) of the polymer (A1), 85.5 parts by mass (solid content equivalent value) of artificial graphite (manufactured by Resonac Corporation, product name "MAG"), which is graphite with high crystallinity, as a negative electrode active material, 9.5 parts by mass (solid content equivalent value) of the graphite-coated silicon oxide powder obtained above, and 1 part by mass of carbon (manufactured by Denka Company Limited, acetylene black), which is a conductive aid, and stirring was performed at 60 rpm for 1 hour to obtain a paste. Water was added to the obtained paste to adjust the solid content concentration to 48 mass%, and then, using a stirring and defoaming machine (manufactured by THINKY CORPORATION, product name "AWATORI RENTARO"), stirring and mixing were performed at 200 rpm for 2 minutes, at 1800 rpm for 5 minutes, and further, under reduced pressure (approximately $2.5 \times 10^4$ Pa), at 1800 rpm for 1.5 minutes to prepare a slurry for an electrical storage device electrode (C/Si = 90/10) containing 10 mass% of Si in the negative electrode active material.

<Stability Test of Slurry>

Using Physica MCR301 manufactured by Anton Paar, approximately 1 mL of the slurry with C/Si = 90/10 was weighed and taken, the shear rate was started from 1 (1/s) using a cone plate with a diameter of 25 mm under conditions of GAP 1 mm and 25°C, and at the time point of reaching 1000 (1/s), the shear rate was again slowed to 1 (1/s), and meanwhile the slurry viscosity behavior was acquired. The measurement from 1 to 1000 (1/s) was defined as forward measurement, the measurement from 1000 to 1 (1/s) was defined as return measurement, and the evaluation criteria were as follows.

(Evaluation Criteria)

- 5 points: The viscosity at the time point of 100 (1/s) in the return measurement is within ±8% of the viscosity at the time point of 100 (1/s) in the forward measurement.
- 4 points: The viscosity at the time point of 100 (1/s) in the return measurement is within ±10% of the viscosity at the time point of 100 (1/s) in the forward measurement.
- 3 points: The viscosity at the time point of 100 (1/s) in the return measurement is within ±15% of the viscosity at the time point of 100 (1/s) in the forward measurement.
- 2 points: The viscosity at the time point of 100 (1/s) in the return measurement is within ±20% of the viscosity at the time point of 100 (1/s) in the forward measurement.
- 1 point: The viscosity at the time point of 100 (1/s) in the return measurement is greater than ±20% of the viscosity at the time point of 100 (1/s) in the forward measurement.

5.1.4. Production and Evaluation of Electrical Storage Device

<Production of Electrical Storage Device Electrode (Negative Electrode)>

The slurry for an electrical storage device electrode (C/Si = 90/10) obtained above was uniformly coated according to a doctor blade method onto the surface of a current collector composed of a copper foil having a thickness of 20 μm such that the film thickness after drying would be 80 μm, drying was performed at 80°C for 5 minutes, and then a drying treatment was performed at 120°C for 5 minutes. Thereafter, pressing was performed with a roll press machine such that the density of the active material layer would be 1.6 g/cm³, to obtain an electrical storage device electrode (negative electrode).

<Evaluation of Adhesion Strength of Negative Electrode Coating Layer>

On the surface of the electrical storage device electrode obtained above, cuts at a depth reaching from the active material layer to the current collector were formed at 2 mm intervals using a knife, with 10 cuts each in the vertical and horizontal directions, to create a cross-cut pattern. An adhesive tape (manufactured by Nichiban Co., Ltd., product name "Cellotape" (registered trademark) specified in JIS Z1522) having a width of 18 mm was attached to the cuts and immediately peeled off, and the degree of detachment of the active material was evaluated by visual judgment. The evaluation criteria are as follows. The evaluation results are shown in Table 1 below.

(Evaluation Criteria)

- • 5 points: The number of detachments of the active material layer is 0.
- • 4 points: The number of detachments of the active material layer is 1 to 5.
- • 3 points: The number of detachments of the active material layer is 6 to 20.
- • 2 points: The number of detachments of the active material layer is 21 to 40.
- • 1 point: The number of detachments of the active material layer is 41 or more.

<Production of Counter Electrode (Positive Electrode)>

A twin-screw planetary mixer (manufactured by PRIMIX Corporation, product name "TK Hivis Mix 2P-03") was loaded with 4 parts by mass (solid content equivalent value) of a binder for electrochemical device electrodes (manufactured by Kureha Corporation, product name "KF Polymer #1120"), 3.0 parts by mass of a conductive aid (manufactured by Denka Company Limited, product name "DENKA BLACK 50% pressed product"), 100 parts by mass (solid content equivalent value) of $LiCoO_2$ (manufactured by Hayashi Chemical Industry Co., Ltd.) having an average particle diameter of 5 $\mu$m as a positive electrode active material, and 36 parts by mass of N-methylpyrrolidone (NMP), and stirring was performed at 60 rpm for 2 hours. After adding NMP to the obtained paste and adjusting the solid content concentration to 65 mass%, using a stirring and defoaming machine (manufactured by THINKY CORPORATION, product name "AWATORI RENTARO"), stirring and mixing were performed at 200 rpm for 2 minutes, at 1800 rpm for 5 minutes, and further, under reduced pressure (approximately $2.5 \times 10^4$ Pa), at 1800 rpm for 1.5 minutes, to prepare a slurry for a positive electrode. This slurry for a positive electrode was uniformly coated according to a doctor blade method onto the surface of a current collector composed of an aluminum foil such that the film thickness after solvent removal would be 80 $\mu$m, and heating was performed at 120°C for 20 minutes to remove the solvent. Thereafter, pressing was performed with a roll press machine such that the density of the active material layer would be 3.0 g/cm$^3$, to obtain a counter electrode (positive electrode).

<Assembly of Lithium Ion Battery Cell>

In a glove box substituted with Ar such that the dew point would be -80°C or lower, the negative electrode produced above punched and molded into a diameter of 16.16 mm was placed on a two-electrode coin cell (manufactured by Hohsen Corp., product name "HS Flat Cell"). Next, a separator (manufactured by Celgard, LLC, product name "Celgard #2400") composed of a polypropylene porous membrane punched to a diameter of 24 mm was placed, and further, after injecting 300 $\mu$L of an electrolytic solution such that air would not enter, the positive electrode produced above punched and molded into a diameter of 15.95 mm was placed, and the outer body of the two-electrode coin cell was closed and sealed with screws to assemble a lithium ion battery cell (electrical storage device). The electrolytic solution used herein was a solution in which $LiPF_6$ was dissolved at a concentration of 1 mol/L in a solvent of ethylene carbonate/ethyl methyl carbonate = 1/1 (mass ratio).

<Evaluation of Cycle Properties>

For the lithium ion secondary battery produced above, in a constant temperature bath adjusted to 25°C, charge was started at a constant current (1.0 C), and when the voltage reached 4.2 V, charge was continued at a constant voltage (4.2 V), and a time point at which the current value became 0.01 C was defined as completion of charge (cutoff). Thereafter, discharge was started at a constant current (1.0 C), and a time point at which the voltage became 2.5 V was defined as completion of discharge (cutoff), and the discharge capacity of the 1st cycle was calculated. Charge and discharge was repeated 100 times in this manner. The capacity retention rate was calculated according to Formula (6) below and evaluated according to the criteria below. The results are shown in Table 1 below.

$$\text{Capacity retention rate (\%)}$$

$$= \text{(Discharge capacity at 100th cycle) / (Discharge capacity at 1st cycle)} \quad (6)$$

(Evaluation Criteria)

- • 5 points: Capacity retention rate is 95% or more.
- • 4 points: Capacity retention rate is 90% or more to less than 95%.
- • 3 points: Capacity retention rate is 85% or more to less than 90%.
- • 2 points: Capacity retention rate is 80% or more to less than 85%.
- • 1 point: Capacity retention rate is 75% or more to less than 80%.
- • 0 points: Capacity retention rate is less than 75%.

<Evaluation of Resistance Increase Rate>

The electrical storage device produced above was placed in a constant temperature bath at 25°C, and charge was started at a constant current (1.0 C). When the voltage reached 4.2 V, charge was continued at a constant voltage (4.2 V), and a time point at which the current value became 0.01 C was defined as completion of charge (cutoff). Thereafter, discharge was started at a constant current (0.05 C), and a time point at which the voltage became 3.0 V was defined as completion of discharge (cutoff), and the discharge capacity at the 0th cycle was calculated. Furthermore, charge was started at a constant current (1.0 C), and when the voltage reached 4.2 V, charge was continued at a constant voltage (4.2 V), and a time point at which the current value became 0.01 C was defined as completion of charge (cutoff). Thereafter, discharge was started at a constant current (1.0 C), and a time point at which the voltage became 3.0 V was defined as completion of discharge (cutoff), and the discharge capacity at the 1st cycle was calculated. In this manner, charge and discharge were repeated 100 times. After repeating charge and discharge 100 times, charge and discharge were performed in the same manner as the 0th cycle, the discharge capacity at the 101st cycle was evaluated, and the resistance increase rate was calculated according to Formula (7) below and evaluated according to the criteria below.

$$\text{Resistance increase rate (\%)}$$

$$= (\text{Discharge capacity at 101st cycle} - \text{Discharge capacity at 100th cycle}) / (\text{Discharge}$$

$$\text{capacity at 0th cycle} - \text{Discharge capacity at 1st cycle}) \times 100 \quad (7)$$

(Evaluation Criteria)

- • 5 points: Resistance increase rate is 100% or more and less than 150%.
- • 4 points: Resistance increase rate is 150% or more and less than 200%.
- • 3 points: Resistance increase rate is 200% or more and less than 250%.
- • 2 points: Resistance increase rate is 250% or more and less than 300%.
- • 1 point: Resistance increase rate is 300% or more and less than 350%.
- • 0 points: Resistance increase rate is 350% or more.

<Evaluation of Electrode Plate Expansion Rate>

The film thickness of the negative electrode produced above was measured and taken as an initial film thickness. Then, for the electrical storage device produced above, charge was started at a constant current (0.2 C) in a constant temperature bath adjusted to 25°C, and when the voltage reached 4.2 V, charge was continued at a constant voltage (4.2 V), and a time point at which the current value became 0.01 C was defined as completion of charge (cutoff). Thereafter, discharge was started at a constant current (0.2 C) in a constant temperature bath adjusted to 25°C, and a time point at which the voltage became 2.5 V was defined as completion of discharge (cutoff), thus completing the formation charge and discharge. Thereafter, a contact sensor (manufactured by Keyence Corporation, product name "GT2-H12KLF") was attached to the electrical storage device, and the film thickness at this point was taken as a film thickness after formation. Then, charge was started at a constant current (0.2 C), and when the voltage reached 4.2 V, charge was continued at a constant voltage (4.2 V), and a time point at which the current value became 0.01 C was defined as completion of charge (cutoff). Thereafter, discharge was started at a constant current (0.2 C) in a constant temperature bath adjusted to 25°C, and a time point at which the voltage became 2.5 V was defined as completion of discharge (cutoff). By measuring the film thickness at the 10th cycle discharge, the electrode plate expansion rate was calculated according to Formula (8) below and evaluated according to the criteria below. The results are shown in Table 1 below.

Electrode plate expansion rate (%) = ((Film thickness at 10th cycle discharge) - (Film thickness after forma-
tion)) / (Initial film thickness) $\times$ 100
$$(8)$$

(Evaluation Criteria)

- 5 points: Electrode plate expansion rate is 40% or less.
- 4 points: Electrode plate expansion rate is more than 40% to 43% or less.
- 3 points: Electrode plate expansion rate is more than 43% to 46% or less.
- 2 points: Electrode plate expansion rate is more than 46% to 50% or less.
- 1 point: Electrode plate expansion rate is more than 50%.

5.2. Examples 2 to 15, Comparative Examples 1 to 6

In Examples 2 to 15 and Comparative Examples 1 and 3 to 6, the types and amounts of monomers were as described in Table 1 to Table 3 below, and each polymer was synthesized according to two-stage polymerization in the same manner as in Example 1 to obtain each binder composition for an electrical storage device. Except for the above, all other aspects were implemented in the same manner as in Example 1.

In Comparative Example 2, the types and amounts of monomers were as described in Table 3 below, and a polymer was synthesized according to single-stage polymerization to obtain a binder composition for an electrical storage device. Except for the above, all other aspects were implemented in the same manner as in Example 1.

5.3. Evaluation Results

Table 1 to Table 3 below show the polymer compositions used in Examples 1 to 15 and Comparative Examples 1 to 6, each physical property measurement result, and each evaluation result. The numerical values representing the polymer compositions shown in Table 1 to Table 3 below represent parts by mass.

[Table 1]

| | | | | Example 1 | Example 2 | Example 3 | Example 4 | Example 5 | Example 6 | Example 7 | Example 8 |
|---|---|---|---|---|---|---|---|---|---|---|---|
| Polymer name | | | | Polymer (A1) | Polymer (A2) | Polymer (A3) | Polymer (A4) | Polymer (A5) | Polymer (A6) | Polymer (A7) | Polymer (A8) |
| First-stage polymerization component | (a1) | Conjugated diene compound | BD (parts by mass) | 50 | 80 | 74 | 50 | 60 | 58 | 59 | 65 |
| | (a2) | Aromatic vinyl compound | ST (parts by mass) | 35 | 18 | 15 | 45 | 35 | 28 | 36 | 20 |
| | | | DVB (parts by mass) | | | | 3 | 1 | | | |
| | (a3) | Unsaturated carboxylic acid | TA (parts by mass) | 1 | 1 | | | | | 2 | |
| | | | AA (parts by mass) | | | 2 | | | 3 | | |
| | | | MAA (parts by mass) | | | 1 | | | 3 | | 2 |
| | (a4) | Unsaturated carboxylic acid ester | MMA (parts by mass) | | | 2 | | | | | |
| | | | BA (parts by mass) | | | | | | 1 | | |
| | | | 2EHA (parts by mass) | | | | | | 1 | | |
| | | | CHMA (parts by mass) | | | | | | 1 | | |
| | | | EDMA (parts by mass) | | | | | | | | |
| | | | HEMA (parts by mass) | | | | | | | | |
| | | | HEA (parts by mass) | | | | | | | | |
| | (a5) | $\alpha,\beta$-Unsaturated nitrile compound | AN (parts by mass) | 5 | | | | | | | 1 |
| | (a6) | (Meth)acrylamide | AAM (parts by mass) | 1 | | | | | | | 1 |
| | | | MAM (parts by mass) | | | 1 | | | | | |
| | (a7) | Compound having sulfonic acid group | NASS (parts by mass) | 1 | | | | | | | |

EP 4 752 982 A1

| | | | | Example 1 | Example 2 | Example 3 | Example 4 | Example 5 | Example 6 | Example 7 | Example 8 |
|---|---|---|---|---|---|---|---|---|---|---|---|
| | | Polymer name | | Polymer (A1) | Polymer (A2) | Polymer (A3) | Polymer (A4) | Polymer (A5) | Polymer (A6) | Polymer (A7) | Polymer (A8) |
| | | First-stage total | | 93 | 99 | 95 | 98 | 96 | 95 | 97 | 89 |
| Second-stage polymerization component | (a1) | Conjugated diene compound | BD (parts by mass) | | | | | | | 1 | |
| | (a2) | Aromatic vinyl compound | ST (parts by mass) | | | | 1 | | | | |
| | | | DVB (parts by mass) | | | | | | | | |
| | (a3) | Unsaturated carboxylic acid | TA (parts by mass) | 1 | | 1 | | | 2 | | |
| | | | AA (parts by mass) | 1 | 1 | | | | | 1 | |
| | | | MAA (parts by mass) | 1 | | | 1 | 0.1 | 2 | | 2 |
| | (a4) | Unsaturated carboxylic acid ester | MMA (parts by mass) | | | | 1 | | | | |
| | | | BA (parts by mass) | | | | | | | 1 | |
| | | | 2EHA (parts by mass) | | | | | | | | |
| | | | CHMA (parts by mass) | | | | | | 1 | | |
| | | | EDMA (parts by mass) | | | | | | | | |
| | | | HEMA (parts by mass) | 1 | | | | 1 | | | |
| | | | HEA (parts by mass) | 1 | | | | 1 | | | |
| | (a5) | α,β-Unsaturated nitrile compound | AN (parts by mass) | 1 | | | | | | | 6 |

EP 4 752 982 A1

| | | | | Example 1 | Example 2 | Example 3 | Example 4 | Example 5 | Example 6 | Example 7 | Example 8 |
|---|---|---|---|---|---|---|---|---|---|---|---|
| | | Polymer name | | Polymer (A1) | Polymer (A2) | Polymer (A3) | Polymer (A4) | Polymer (A5) | Polymer (A6) | Polymer (A7) | Polymer (A8) |
| | (a6) | (Meth)acrylamide | AAM (parts by mass) | | | 1 | | 1 | | | |
| | | | MAM (parts by mass) | | | 1 | | | | | |
| | (a7) | Compound having sulfonic acid group | NASS (parts by mass) | 1 | | 1 | | 1 | | | 3 |
| | | Second-stage total | | 7 | 1 | 5 | 2 | 4 | 5 | 3 | 11 |
| Total | (a1) | Conjugated diene compound (parts by mass) | | 50 | 80 | 74 | 50 | 60 | 58 | 60 | 65 |
| | (a2) | Aromatic vinyl compound (parts by mass) | | 35 | 18 | 15 | 49 | 36 | 28 | 36 | 20 |
| | (a3) | Unsaturated carboxylic acid (parts by mass) | | 4 | 2 | 4 | 1 | 0.1 | 10 | 3 | 4 |
| | (a4) | Unsaturated carboxylic acid ester (parts by mass) | | 2 | 0 | 3 | 0 | 2 | 4 | 1 | 0 |
| | (a5) | $\alpha,\beta$-Unsaturated nitrile compound (parts by mass) | | 6 | 0 | 0 | 0 | 0 | 0 | 0 | 7 |
| | (a1)+(a2)+(a3) (parts by mass) | | | 89 | 100 | 93 | 100 | 96 | 96 | 99 | 89 |
| | First stage + second stage total | | | 100 | 100 | 100 | 100 | 100 | 100 | 100 | 100 |
| Physical properties | Number average particle diameter (nm) | | | 190 | 260 | 140 | 90 | 50 | 310 | 290 | 440 |
| | pH | | | 7.0 | 7.2 | 8.1 | 8.8 | 9.0 | 6.0 | 8.3 | 7.6 |
| | Electrolytic solution swelling degree (mass%) | | | 171 | 120 | 134 | 123 | 130 | 140 | 127 | 178 |
| | Surface acid content (mmol/g) | | | 0.37 | 0.15 | 0.40 | 0.11 | 0.05 | 1.00 | 0.27 | 0.46 |
| | Relaxation time of protons in 10% latex (ms) | | | 2120 | 2150 | 1560 | 2200 | 2230 | 1500 | 2020 | 1890 |

EP 4 752 982 A1

24

(continued)

| | | | Example 1 | Example 2 | Example 3 | Example 4 | Example 5 | Example 6 | Example 7 | Example 8 |
|---|---|---|---|---|---|---|---|---|---|---|
| Polymer name | | | Polymer (A1) | Polymer (A2) | Polymer (A3) | Polymer (A4) | Polymer (A5) | Polymer (A6) | Polymer (A7) | Polymer (A8) |
| | Dynamic vis-coelasticity | $\tan\delta$-1 temperature (°C) | 8 | -50 | -44 | 10 | -18 | -7 | -10 | -15 |
| | | $\tan\delta$-1 | 0.96 | 1.14 | 0.76 | 1.18 | 0.98 | 0.82 | 1.11 | 0.67 |
| | | $\tan\delta$-2 temperature (°C) | 192 | 162 | 186 | 167 | 189 | 198 | 150 | 250 |
| | | $\tan\delta$-2 | 0.05 | 006 | 0.08 | 0.10 | 0.26 | 0.18 | 0.12 | 0.28 |
| | | $\tan\delta$-2/$\tan\delta$-1 | 0.05 | 0.05 | 0.11 | 0.08 | 0.27 | 0.22 | 0.11 | 0.42 |
| Evaluation | C/Si=90/10 | Slurry stability | 5 | 5 | 3 | 5 | 5 | 3 | 4 | 4 |
| | | Adhesion strength | 4 | 5 | 5 | 4 | 4 | 4 | 4 | 5 |
| | | Cycle properties | 4 | 4 | 5 | 4 | 4 | 5 | 4 | 5 |
| | | Resistance increase rate | 5 | 4 | 5 | 5 | 5 | 5 | 4 | 5 |
| | | Electrode plate expansion rate | 5 | 4 | 5 | 5 | 4 | 5 | 4 | 5 |

[Table 2]

| First-stage polymerization component | | Polymer name | Example 9 Polymer (A9) | Example 10 Polymer (A10) | Example 11 Polymer (A11) | Example 12 Polymer (A12) | Example 13 Polymer (A13) | Example 14 Polymer (A14) | Example 15 Polymer (A15) |
|---|---|---|---|---|---|---|---|---|---|
| (a1) | Conjugated diene compound | BD (parts by mass) | 55 | 58 | 57 | 68 | 61 | 65 | 56 |
| (a2) | Aromatic vinyl compound | ST (parts by mass) | 22 | 17 | 18 | 17 | 25 | 19 | 25 |
| (a2) | | DVB (parts by mass) | | | | 1 | | 1 | 1 |
| (a3) | Unsaturated carboxylic acid | TA (parts by mass) | 1 | 1 | 1 | | | 1 | |
| (a3) | | AA (parts by mass) | 1 | 1 | | | 1 | | |
| (a3) | | MAA (parts by mass) | 1 | 1 | | | 1 | | 3 |
| (a4) | Unsaturated carboxylic acid ester | MMA (parts by mass) | | 3 | | 2 | | | |
| (a4) | | BA (parts by mass) | | | 3 | 2 | | | |
| (a4) | | 2EHA (parts by mass) | | | 3 | 2 | | | |
| (a4) | | CHMA (parts by mass) | | | | 2 | | | |
| (a4) | | EDMA (parts by mass) | | 1 | | 1 | | | |
| (a4) | | HEMA (parts by mass) | | | 1 | | | | |
| (a4) | | HEA (parts by mass) | | | 1 | | | | |
| (a5) | α,β-Unsaturated nitrile compound | AN (parts by mass) | | | 5 | | 8 | 8 | |
| (a6) | (Meth)acrylamide | AAM (parts by mass) | | 1 | | | | | |
| (a6) | | MAM (parts by mass) | | | | | | | |
| (a7) | Compound having sulfonic acid group | NASS (parts by mass) | | 1 | | | 1 | | |

(continued)

| | | | | Example 9 | Example 10 | Example 11 | Example 12 | Example 13 | Example 14 | Example 15 |
|---|---|---|---|---|---|---|---|---|---|---|
| Polymer name | | | | Polymer (A9) | Polymer (A10) | Polymer (A11) | Polymer (A12) | Polymer (A13) | Polymer (A14) | Polymer (A15) |
| First-stage total | | | | 80 | 84 | 89 | 95 | 97 | 94 | 85 |
| Second-stage polymerization component | (a1) | Conjugated diene compound | BD (parts by mass) | | | | | | | |
| | (a2) | Aromatic vinyl compound | ST (parts by mass) | | 1 | | | | | 3 |
| | | | DVB (parts by mass) | | | | | | | |
| | (a3) | Unsaturated carboxylic acid | TA (parts by mass) | 2 | | 2 | | | | |
| | | | AA (parts by mass) | 2 | | | 1 | 1 | 1 | 3 |
| | | | MAA (parts by mass) | 2 | 1 | | 1 | | 1 | 3 |
| | (a4) | Unsaturated carboxylic acid ester | MMA (parts by mass) | | 5 | 1 | | | | 2 |
| | | | BA (parts by mass) | | | | | | | |
| | | | 2EHA (parts by mass) | | | | | | | |
| | | | CHMA (parts by mass) | | | 2 | 3 | | | 2 |
| | | | EDMA (parts by mass) | | | | | | | |
| | | | HEMA (parts by mass) | | | | | | | |
| | | | HEA (parts by mass) | 2 | | | | | | |
| | (a5) | $\alpha,\beta$-Unsaturated nitrile compound | AN (parts by mass) | 3 | 5 | 3 | | 2 | 4 | 2 |
| | (a6) | (Meth)acrylamide | AAM (parts by mass) | 2 | 2 | 3 | | | | |
| | | | MAM (parts by mass) | 2 | 1 | | | | | |

(continued)

| | | | Example 9 | Example 10 | Example 11 | Example 12 | Example 13 | Example 14 | Example 15 |
|---|---|---|---|---|---|---|---|---|---|
| | Polymer name | | Polymer (A9) | Polymer (A10) | Polymer (A11) | Polymer (A12) | Polymer (A13) | Polymer (A14) | Polymer (A15) |
| | (a7) | Compound having sulfonic acid group | NASS (parts by mass) | 5 | 1 | | | | | |
| | Second-stage total | | 20 | 16 | 11 | 5 | 3 | 6 | 15 |
| Total | (a1) | Conjugated diene compound (parts by mass) | 55 | 58 | 57 | 68 | 61 | 65 | 56 |
| | (a2) | Aromatic vinyl compound (parts by mass) | 22 | 18 | 18 | 18 | 25 | 20 | 29 |
| | (a3) | Unsaturated carboxylic acid (parts by mass) | 9 | 4 | 3 | 4 | 3 | 3 | 9 |
| | (a4) | Unsaturated carboxylic acid ester (parts by mass) | 2 | 9 | 11 | 10 | 0 | 0 | 4 |
| | (a5) | $\alpha,\beta$-Unsaturated nitrile compound (parts by mass) | 3 | 5 | 8 | 0 | 10 | 12 | 2 |
| | (a1)+(a2)+(a3) (parts by mass) | | 86 | 80 | 78 | 90 | 89 | 88 | 94 |
| | First stage + second stage total | | 100 | 100 | 100 | 100 | 100 | 100 | 100 |
| Physical properties | Number average particle diameter (nm) | | 360 | 500 | 470 | 150 | 220 | 280 | 190 |
| | pH | | 6.3 | 8.7 | 8.5 | 8.2 | 7.9 | 8.0 | 8.0 |
| | Electrolytic solution swelling degree (mass%) | | 158 | 163 | 189 | 145 | 200 | 221 | 167 |
| | Surface acid content (mmol/g) | | 0.89 | 0.62 | 0.30 | 0.42 | 0.28 | 0.33 | 0.92 |
| | Relaxation time of protons in 10% latex (ms) | | 1650 | 2080 | 1990 | 1740 | 1900 | 2200 | 1400 |
| | Dynamic viscoelasticity | tan$\delta$-1 temperature (°C) | 3 | -5 | -3 | -33 | -12 | -24 | -18 |
| | | tan$\delta$-1 | 0.61 | 0.48 | 0.51 | 0.70 | 1.05 | 0.58 | 0.54 |
| | | tan$\delta$-2 temperature (°C) | 242 | 233 | 219 | 208 | 178 | 202 | 218 |
| | | tan$\delta$-2 | 0.30 | 0.22 | 0.18 | 0.20 | 0.09 | 0.15 | 0.15 |
| | | tan$\delta$-2/tan$\delta$-1 | 0.49 | 0.46 | 0.35 | 0.29 | 0.09 | 0.26 | 0.28 |

EP 4 752 982 A1

| Evaluation | C/Si=90/10 | | Example 9 | Example 10 | Example 11 | Example 12 | Example 13 | Example 14 | Example 15 |
|---|---|---|---|---|---|---|---|---|---|
| | Polymer name | | Polymer (A9) | Polymer (A10) | Polymer (A11) | Polymer (A12) | Polymer (A13) | Polymer (A14) | Polymer (A15) |
| | | Slurry stability | 4 | 5 | 4 | 4 | 4 | 5 | 5 |
| | | Adhesion strength | 4 | 5 | 3 | 3 | 4 | 3 | 4 |
| | | Cycle properties | 4 | 5 | 4 | 4 | 4 | 3 | 3 |
| | | Resistance increase rate | 5 | 5 | 3 | 4 | 4 | 3 | 4 |
| | | Electrode plate expansion rate | 4 | 5 | 3 | 4 | 5 | 4 | 3 |

[Table 3]

| First-stage polymerization component | | Polymer name | | Comparative Example 1 Polymer (B1) | Comparative Example 2 Polymer (B2) | Comparative Example 3 Polymer (B3) | Comparative Example 4 Polymer (B4) | Comparative Example 5 Polymer (B5) | Comparative Example 6 Polymer (B6) |
|---|---|---|---|---|---|---|---|---|---|
| | (a1) | Conjugated diene compound | BD (parts by mass) | 45 | 82 | 70 | 65 | 58 | 53 |
| | (a2) | Aromatic vinyl compound | ST (parts by mass) | 52 | 16 | 13 | 28 | 20 | 12 |
| | | | DVB (parts by mass) | | | | | 1 | |
| | (a3) | Unsaturated carboxylic acid | TA (parts by mass) | 1 | | 2 | | 3 | 1 |
| | | | AA (parts by mass) | | 2 | | | 3 | |
| | | | MAA (parts by mass) | | | 3 | | 3 | |
| | | | MMA (parts by mass) | | | | | | 1 |
| | | | BA (parts by mass) | | | | | | 1 |
| | | | 2EHA (parts by mass) | | | | | | 1 |
| | (a4) | Unsaturated carboxylic acid ester | CHMA (parts by mass) | | | | | | 1 |
| | | | EDMA (parts by mass) | | | | | | 1 |
| | | | HEMA (parts by mass) | | | | | | 1 |
| | | | HEA (parts by mass) | | | | | | 1 |
| | (a5) | α,β-Unsaturated nitrile compound | AN (parts by mass) | | | | | 3 | |
| | (a6) | (Meth)acrylamide | AAM (parts by mass) | | | 1 | 1 | | |
| | | | MAM (parts by mass) | | | 1 | 1 | | |
| | (a7) | Compound having sulfonic acid group | NASS (parts by mass) | | | 1 | 1 | | |
| | | First-stage total | | 98 | 100 | 90 | 96 | 91 | 73 |

(continued)

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Polymer name | | | | Polymer (B1) | Polymer (B2) | Polymer (B3) | Polymer (B4) | Polymer (B5) | Polymer (B6) |
| Second-stage polymerization component | (a1) | Conjugated diene compound | BD (parts by mass) | | | | | | |
| | (a2) | Aromatic vinyl compound | ST (parts by mass) | | | | | 2 | 2 |
| | | | DVB (parts by mass) | | | | | | 8 |
| | (a3) | Unsaturated carboxylic acid | TA (parts by mass) | | | 2 | | 1 | 2 |
| | | | AA (parts by mass) | 1 | | 2 | | 1 | 2 |
| | | | MAA (parts by mass) | | | | | 1 | 2 |
| | (a4) | Unsaturated carboxylic acid ester | MMA (parts by mass) | 1 | | 2 | | | 2 |
| | | | BA (parts by mass) | | | | | | |
| | | | 2EHA (parts by mass) | | | | | | |
| | | | CHMA (parts by mass) | | | 2 | | | 2 |
| | | | EDMA (parts by mass) | | | | | | |
| | | | HEMA (parts by mass) | | | 1 | 1 | | |
| | | | HEA (parts by mass) | | | 1 | 1 | 2 | |
| | (a5) | $\alpha,\beta$-Unsaturated nitrile compound | AN (parts by mass) | | | | | 2 | 4 |
| | (a6) | (Meth)acrylamide | AAM (parts by mass) | | | | | | 1 |
| | | | MAM (parts by mass) | | | | 1 | | 1 |
| | (a7) | Compound having sulfonic acid group | NASS (parts by mass) | | | | 1 | | 1 |
| Second-stage total | | | | 2 | 0 | 10 | 4 | 9 | 27 |

EP 4 752 982 A1

(continued)

| | | | Comparative Example 1 | Comparative Example 2 | Comparative Example 3 | Comparative Example 4 | Comparative Example 5 | Comparative Example 6 |
|---|---|---|---|---|---|---|---|---|
| Polymer name | | | Polymer (B1) | Polymer (B2) | Polymer (B3) | Polymer (B4) | Polymer (B5) | Polymer (B6) |
| Total | (a1) | Conjugated diene compound (parts by mass) | 45 | 82 | 70 | 65 | 58 | 53 |
| | (a2) | Aromatic vinyl compound (parts by mass) | 52 | 16 | 13 | 28 | 23 | 22 |
| | (a3) | Unsaturated carboxylic acid (parts by mass) | 2 | 2 | 9 | 0 | 12 | 7 |
| | (a4) | Unsaturated carboxylic acid ester (parts by mass) | 1 | 0 | 6 | 2 | 2 | 11 |
| | (a5) | $\alpha,\beta$-Unsaturated nitrile compound (parts by mass) | 0 | 0 | 0 | 0 | 5 | 4 |
| | (a1)+(a2)+(a3) (parts by mass) | | 99 | 100 | 92 | 93 | 93 | 82 |
| | First stage + second stage total | | 100 | 100 | 100 | 100 | 100 | 100 |
| Physical properties | Number average particle diameter (nm) | | 140 | 190 | 270 | 330 | 250 | 110 |
| | pH | | 7.8 | 8.2 | 7.4 | 8.5 | 6.2 | 8.1 |
| | Electrolytic solution swelling degree (mass%) | | 125 | 131 | 152 | 139 | 122 | 176 |
| | Surface acid content (mmol/g) | | 0.19 | 0.22 | 0.91 | 0.00 | 1.23 | 0.76 |
| | Relaxation time of protons in 10% latex (ms) | | 2100 | 1450 | 1730 | 2230 | 950 | 1800 |
| | Dynamic viscoelasticity | tan$\delta$-1 temperature (°C) | 13 | -43 | -29 | -19 | -10 | 4 |
| | | tan$\delta$-1 | 0.99 | 1.10 | 0.56 | 0.81 | 0.75 | 0.64 |
| | | tan$\delta$-2 temperature (°C) | 165 | 158 | 241 | 225 | 204 | 235 |
| | | tan$\delta$-2 | 0.15 | 0.10 | 0.18 | 0.22 | 0.15 | 0.34 |
| | | tan$\delta$-2/tan$\delta$-1 | 0.15 | 0.09 | 0.32 | 0.27 | 0.20 | 0.53 |

(continued)

| | | | Comparative Example 1 Polymer (B1) | Comparative Example 2 Polymer (B2) | Comparative Example 3 Polymer (B3) | Comparative Example 4 Polymer (B4) | Comparative Example 5 Polymer (B5) | Comparative Example 6 Polymer (B6) |
|---|---|---|---|---|---|---|---|---|
| Polymer name | | | | | | | | |
| Evaluation | C/Si=90/10 | Slurry stability | 4 | 2 | 3 | 5 | 1 | 3 |
| | | Adhesion strength | 1 | 5 | 4 | 4 | 1 | 2 |
| | | Cycle properties | 2 | 2 | 2 | 1 | 1 | 2 |
| | | Resistance increase rate | 3 | 1 | 2 | 1 | 1 | 2 |
| | | Electrode plate expansion rate | 2 | 3 | 2 | 1 | 1 | 1 |

The polymer numbers synthesized in each example are described in the row below the Example numbers and Comparative Example numbers in Table 1 to Table 3 above. The monomers in Table 1 to Table 3 above represent the following compounds, respectively.

<Conjugated Diene Compound>

- BD: 1,3-butadiene

<Aromatic Vinyl Compound>

- ST: styrene
- DVB: divinylbenzene

<Unsaturated Carboxylic Acid>

- TA: itaconic acid
- AA: acrylic acid
- MAA: methacrylic acid

<Unsaturated Carboxylic Acid Ester>

- MMA: methyl methacrylate
- BA: butyl acrylate
- 2EHA: 2-ethylhexyl acrylate
- CHMA: cyclohexyl methacrylate
- EDMA: ethylene glycol dimethacrylate
- HEMA: 2-hydroxyethyl methacrylate
- HEA: 2-hydroxyethyl acrylate

<$\alpha,\beta$-Unsaturated Nitrile Compound>

- AN: acrylonitrile

<(Meth)acrylamide>

- AAM: acrylamide
- MAM: methacrylamide

<Compound Having Sulfonic Acid Group>

- NASS: sodium styrenesulfonate

In Examples 1 to 15, as the slurry for an electrical storage device electrode, slurries formed by containing the binder composition for an electrical storage device of the present invention and an active material including a silicon material are used. By containing the binder composition for an electrical storage device of Examples 1 to 15, the binder particles were not destroyed by the active material having a large volume change accompanying charge and discharge, and the particle shape could be maintained. Accordingly, it was found that the active materials can be suitably bound to each other, the electrode plate expansion rate can be reduced, and adhesion between the active material layer and the current collector can be favorably maintained. Furthermore, it was found that, since the binder particles can maintain the particle shape, permeability of the electrolytic solution is enhanced, and the resistance increase rate can also be suppressed. As a result of these findings, it is inferred that an electrical storage device electrode having favorable cycle properties was obtained, with peeling of the active material layer suppressed and electrode plate expansion reduced, even in the case of repeating charge and discharge and repeating volume expansion and contraction due to the active material.

The present invention is not limited to the above embodiments, and various modifications are possible. The present invention includes configurations substantially identical to the configurations described in the embodiments (e.g., configurations having identical functions, methods, and results, or configurations having identical objectives and effects). In addition, the present invention also includes configurations in which non-essential portions of the configurations described in the above embodiments are replaced with other configurations. Furthermore, the present invention also includes configurations that exhibit the same actions and effects as the configurations described in the above embodiments or configurations capable of achieving the same objectives. Furthermore, the present invention also includes configurations in which conventional techniques are added to the configurations described in the above embodiments.

**Claims**

1. A binder composition for an electrical storage device comprising a polymer (A) and a liquid medium (B), wherein with a total of repeating units contained in the polymer (A) being 100 parts by mass, the polymer (A) comprises:

   50 to 80 parts by mass of a repeating unit (a1) derived from a conjugated diene compound;
   15 to 49 parts by mass of a repeating unit (a2) derived from an aromatic vinyl compound; and
   0.1 to 10 parts by mass of a repeating unit (a3) derived from an unsaturated carboxylic acid, wherein
   $\tan\delta$ (loss modulus/storage modulus) of dynamic viscoelasticity of the polymer (A) has one peak top in a range of -50°C or higher and 10°C or lower and has one peak top in a range of 150°C or higher and 250°C or lower, and with $\tan\delta$ of the peak top in the range of -50°C or higher and 10°C or lower being $\tan\delta(Tp1)$ and $\tan\delta$ of the peak top in the range of 150°C or higher and 250°C or lower being $\tan\delta(Tp2)$, a relationship of Formula (1) below is satisfied:

$$\tan\delta(Tp2) \, / \, \tan\delta(Tp1) < 0.5 \qquad (1).$$

2. The binder composition for an electrical storage device according to claim 1, wherein a relaxation time of protons upon measuring a latex of the polymer (A) having a solid content concentration of 10% according to a CPMG method of pulse NMR is 1500 ms or more.

3. The binder composition for an electrical storage device according to claim 1 or 2, wherein a total amount of the repeating unit (a1), the repeating unit (a2), and the repeating unit (a3) is 80 parts by mass or more.

4. The binder composition for an electrical storage device according to claim 1 or 2, wherein the polymer (A) further comprises 0.1 to 10 parts by mass of a repeating unit (a4) derived from an unsaturated carboxylic acid ester.

5. The binder composition for an electrical storage device according to claim 1 or 2, wherein the polymer (A) further comprises 0.1 to 10 parts by mass of a repeating unit (a5) derived from an $\alpha,\beta$-unsaturated nitrile compound.

6. The binder composition for an electrical storage device according to claim 1 or 2, wherein an electrolytic solution swelling degree of the polymer (A) is 100 to 350%.

7. The binder composition for an electrical storage device according to claim 1 or 2, wherein the polymer (A) is a polymer particle, and a number average particle diameter of the polymer particle is 50 nm or more and 500 nm or less.

8. The binder composition for an electrical storage device according to claim 7, wherein a surface acid content of the polymer particle is 0.05 mmol/g or more and 1 mmol/g or less.

9. The binder composition for an electrical storage device according to claim 1 or 2, wherein the liquid medium (B) is water.

10. A slurry for an electrical storage device electrode comprising the binder composition for an electrical storage device according to claim 1 and an active material.

11. The slurry for an electrical storage device electrode according to claim 10, comprising a silicon material as the active material.

12. An electrical storage device electrode comprising:

a current collector; and
an active material layer formed by coating and drying the slurry for an electrical storage device electrode according to claim 10 or 11 onto a surface of the current collector.

13. An electrical storage device comprising the electrical storage device electrode according to claim 12.

Temperature (°C)

FIG. 1

## INTERNATIONAL SEARCH REPORT

| International application No. |
|---|
| **PCT/JP2024/024839** |

**A.    CLASSIFICATION OF SUBJECT MATTER**

*H01M 4/62*(2006.01)i; *C08F 279/02*(2006.01)i; *H01G 11/24*(2013.01)i; *H01G 11/30*(2013.01)i; *H01G 11/86*(2013.01)i; *H01M 4/13*(2010.01)i; *H01M 4/134*(2010.01)i; *H01M 4/139*(2010.01)i
FI:    H01M4/62 Z; C08F279/02; H01G11/24; H01G11/30; H01G11/86; H01M4/13; H01M4/134; H01M4/139

According to International Patent Classification (IPC) or to both national classification and IPC

**B.    FIELDS SEARCHED**

Minimum documentation searched (classification system followed by classification symbols)

H01M4/62; C08F279/02; H01G11/24; H01G11/30; H01G11/86; H01M4/13; H01M4/134; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2022/039002 A1 (JSR CORP.) 24 February 2022 (2022-02-24)<br>claims | 1-13 |
| A | JP 2011-108373 A (NIPPON A & L INC.) 02 June 2011 (2011-06-02)<br>cliams | 1-13 |
| A | JP 2020-184461 A (JSR CORP.) 12 November 2020 (2020-11-12)<br>claims | 1-13 |
| A | WO 2022/220169 A1 (ENEOS MATERIALS CORPORATION) 20 October 2022<br>(2022-10-20)<br>claims | 1-13 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **05 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/024839**

| Patent document cited in search report | | | Publication date (day/month/year) | Patent family member(s) | | | Publication date (day/month/year) |
|---|---|---|---|---|---|---|---|
| WO | 2022/039002 | A1 | 24 February 2022 | US claims | 2023/0312906 | A1 | |
| | | | | EP | 4203108 | A1 | |
| | | | | CN | 116075952 | A | |
| | | | | KR | 10-2023-0054404 | A | |
| JP | 2011-108373 | A | 02 June 2011 | (Family: none) | | | |
| JP | 2020-184461 | A | 12 November 2020 | EP claims | 3968417 | A1 | |
| | | | | CN | 113795950 | A | |
| | | | | KR | 10-2022-0006521 | A | |
| | | | | TW | 202104310 | A | |
| WO | 2022/220169 | A1 | 20 October 2022 | US claims | 2024/0194881 | A1 | |
| | | | | EP | 4325605 | A1 | |
| | | | | CN | 117178389 | A | |
| | | | | KR | 10-2023-0173131 | A | |
| | | | | TW | 202302672 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011096463 A
- JP 2013191080 A
- JP 2010205722 A
- JP 2010003703 A
- JP 2011204592 A
- JP 5999399 B
- JP 5477610 B
- JP 2020184461 A